(19) Europäisches Patentamt / European Patent Office / Office européen des brevets

(11) EP 2 474 574 B1

(12) **EUROPEAN PATENT SPECIFICATION**

(45) Date of publication and mention of the grant of the patent:
**08.08.2018 Bulletin 2018/32**

(21) Application number: **10813791.0**

(22) Date of filing: **02.09.2010**

(51) Int Cl.:
*C09B 67/20* (2006.01) *C09B 29/48* (2006.01)
*C09B 33/12* (2006.01) *C09B 35/03* (2006.01)

(86) International application number:
**PCT/JP2010/065075**

(87) International publication number:
**WO 2011/027843 (10.03.2011 Gazette 2011/10)**

(54) **PROCESS FOR PRODUCTION OF AZO PIGMENT, AZO PIGMENT, AND COLORING COMPOSITION**

VERFAHREN ZUR HERSTELLUNG EINES AZO-PIGMENTS, AZO-PIGMENT UND FÄRBEMITTELZUSAMMENSETZUNG

PROCÉDÉ DE PRODUCTION D'UN PIGMENT AZOÏQUE, PIGMENT AZOÏQUE ET COMPOSITION COLORANTE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **04.09.2009 JP 2009205357**

(43) Date of publication of application:
**11.07.2012 Bulletin 2012/28**

(73) Proprietor: **FUJIFILM Corporation**
**Tokyo 106-0031 (JP)**

(72) Inventors:
- **NAGATA, Yoshiaki**
  **Kanagawa (JP)**
- **HAYASHI, Shinya**
  **Kanagawa (JP)**
- **TATEISHI, Keiichi**
  **Kanagawa (JP)**

(74) Representative: **Hoffmann Eitle**
**Patent- und Rechtsanwälte PartmbB**
**Arabellastraße 30**
**81925 München (DE)**

(56) References cited:

**EP-A1- 2 042 570**
**EP-A1- 2 154 209**
**EP-A1- 2 223 977**
**EP-A1- 2 223 978**
**EP-A1- 2 230 282**
**EP-A1- 2 264 107**
**EP-A1- 2 330 164**
**EP-A1- 2 343 343**
**WO-A1-97/31067**
**WO-A1-2009/110643**
**WO-A1-2010/035845**
**WO-A2-2009/005137**
**WO-A2-2009/031687**
**JP-A- 11 279 429**
**JP-A- 2004 083 779**
**JP-A- 2004 091 560**
**JP-A- 2007 063 520**
**JP-A- 2007 217 681**

- **DATABASE WPI Week 200929 Thomson Scientific, London, GB; AN 2009-H15336 XP002719826, -& JP 2009 073992 A (FUJI FILM CO LTD) 9 April 2009 (2009-04-09)**
- **DATABASE WPI Week 200932 Thomson Scientific, London, GB; AN 2009-H15122 XP002719827, -& JP 2009 073978 A (FUJI FILM CO LTD) 9 April 2009 (2009-04-09)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The present invention relates to a production process of an azo pigment, an azo pigment and a coloring composition.

### BACKGROUND ART

As for the method to synthesize an azo compound, various methods have been long known and, for example, there are synthesis by oxidation reaction, synthesis by reduction reaction, synthesis by displacement reaction, synthesis by addition reaction, synthesis by condensation reaction and other synthesis methods (see, for example, Non-Patent Document 1). However, in view of raw material availability, cost, yield and the like, the method utilized as an industrial production process for an azo dye compound is in most cases a method of synthesizing the compound by the azo-coupling reaction of a diazonium compound with a coupling component such as aniline and phenols, and this method also has drawbacks such as risk of explosion of the diazonium compound or low yield depending on the kind of the diazonium compound or coupling component. Among others, a highly general synthesis method of a heterocyclic diazonium compound is not known, because the diazonium compound is unstable in many cases.

Also, an organic pigment widely used as a coloring material is demanded to be more improved in the sharpness, transparency and the like particularly in applications such as liquid crystal display color filter and inkjet ink. For enhancing the sharpness or transparency, it is known to be effective to finely disperse the organic pigment. In order to finely disperse the organic pigment, use of a dispersant or disperser suited therefor is required and furthermore, as the basic premise, it is necessary that the organic pigment itself is fine (fine particle). If the organic pigment is a coarse particle, an excellent fine dispersion can be hardly obtained even when the dispersant or dispersing method is improved. Accordingly, in producing a pigment, production as a fine particle is demanded, in addition to normal requirements such as purity and yield.

As for the method to obtain a fine organic pigment, Patent Document 1 describes a method where a solution prepared by dissolving a pigment in an amide-based organic solvent is poured in a poor solvent to thereby obtain fine nanosize particles. However, in this method, the concentration of the pigment solution is as low as about 10 mM, and a large amount of a solvent is used for obtaining a pigment, which is unprofitable.

Patent Document 2 describes a method capable of producing a specific monoazo pigment with a high purity. However, it is generally difficult to obtain a high-purity azo pigment in a high yield by applying this method to a more unstable heterocyclic diazonium compound.

Patent Document 3 describes a production process for obtaining a high-purity azo compound in a high yield by using a diazonium compound of pyrazole. This method is effective in producing a dye, but the particle size of the compound produced by this process is not described.

The Patent Documents 4 and 5 describe coupling reactions obtaining similar azo pigments in which a diazo component is combined with solutions of coupling agents dissolved in methanol respectively N,N-dimethylacetamide.

### RELATED ART

### PATENT DOCUMENT

Patent Document 1: JP-A-2004-91560
Patent Document 2: JP-A-2008-63524
Patent Document 3: JP-A-2007-217681
Patent Document4: JP-A-2009-073992
Patent Document 5: WO 2009/005137 A2

### NON-PATENT DOCUMENT

Non-Patent Document 1: Shin Jikken Kagaku Koza (New Experimental Chemistry Course), Vol. 14-III, pp. 1516-1534 (Maruzen)

SUMMARY OF THE INVENTION

Problem to be Solved by the Invention:

An object of the present invention is to provide a production process of an azo pigment, where an azo pigment fine particle can be produced with high efficiency at a low cost as defined in claim 1, an azo pigment using the production process, and a coloring composition.

Means for Solving the Problem:

Under these circumstances, the present inventors have made intensive studies, as a result, it has been found that when the azo coupling reaction of a diazonium salt with a coupling component allows for creating a state of an azo compound being not completely precipitated in the reaction solution (a state of at least a part of the azo compound being dissolved in the reaction solution) and the reaction solution is poured in a poor solvent for the azo compound, the above-described object can be attained. The present invention has been accomplished based on this finding.

In the following paragraphs [0012] through [0014] the inventive process is described in detail.

[1] A process for producing an azo pigment or its salt, hydrate or solvate, comprising:

(a) a step of reacting a diazotizing agent with an amino compound to produce a diazonium compound,
(b) a step of performing a coupling reaction between the diazonium compound obtained in step (a) and a coupling component to obtain a mixture in which at least a part of an azo compound represented by the following formula (1) produced by the coupling reaction is dissolved, and
(c) a step of mixing the mixture obtained in step (b) with a poor solvent for the azo compound so as to crystallize an azo pigment of formula (1):

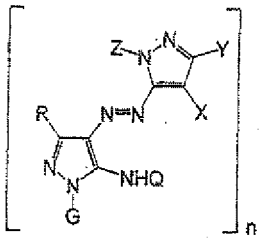

In formula (1), G represents a heterocyclic group, each of R, X, Y, Z and Q independently represents a hydrogen atom or a substituent, n represents an integer of 1 to 4, and the formula represents a dimer through R, X, Y, Z, Q or G when n=2, represents a trimer through R, X, Y, Z, Q or G when n=3, and represents a tetramer through R, X, Y, Z, Q or G when n=4;
wherein, in step (b), the diazonium compound obtained in step (a) is mixed with an acidic solution containing the coupling component dissolved in an acidic solvent, the acidic solvent comprising at least one of acetic acid and sulfuric acid.

[2] The process for producing an azo pigment or its salt, hydrate or solvate as claimed in [1], wherein in said step (b), an acidic solution obtained by dissolving said coupling component in an acidic solvent and the reaction product obtained in said step (a) are mixed.
[3] The process for producing an azo pigment or its salt, hydrate or solvate as claimed in [2], wherein said acidic solvent is a solvent containing at least either one of acetic acid and sulfuric acid.
[4] The process for producing an azo pigment or its salt, hydrate or solvate as claimed in any one of [1] to [3], wherein in said step (b), a solution having completely dissolved therein the azo compound represented by formula (1) produced by the coupling reaction is obtained.
[5] The process for producing an azo pigment or its salt, hydrate or solvate as described in any one of [1] to [4] above, wherein the azo compound obtained in the step (b) is mixed with a poor solvent satisfying the condition that the solubility of the azo compound in the poor solvent is 1 g/L or less.
[6] The process for producing an azo pigment or its salt, hydrate or solvate as claimed in any one of [1] to [5], wherein said poor solvent contains one or more solvents selected from the group consisting of water and an alcohol having a carbon number of 1 to 3.
[7] The process for producing an azo pigment or its salt, hydrate or solvate as claimed in any one of [1] to [6], wherein

said azo pigment represented by formula (1) is an azo pigment represented by the following formula (2):

Formula (2):

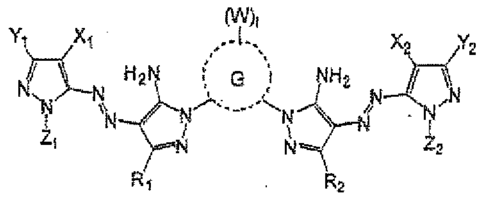

In formula (2), each of $R_1$ and $R_2$ independently represents a hydrogen atom or a substituent, each of $X_1$ and $X_2$ independently represents an electron-withdrawing group having a Hammett's $\sigma p$ value of 0.2 or more, each of $Y_1$ and $Y_2$ independently represents a hydrogen atom or a monovalent substituent, each of $Z_1$ and $Z_2$ independently represents a monovalent substituent, G represents a 5- or 6-membered heterocyclic group, W represents a substituent capable of bonding to the heterocyclic group constituted by G, and t represents an integer of 0 to 3.

[8] The process for producing an azo pigment or its salt, hydrate or solvate as claimed in any one of [1] to [7], wherein in the azo pigment represented by formula (1) or (2), the heterocyclic group represented by G is a 6-membered nitrogen-containing heterocyclic ring.

[9] The process for producing an azo pigment or its salt, hydrate or solvate as claimed in any one of [1] to [8], wherein in the azo pigment represented by formula (1) or (2), the heterocyclic group represented by G is represented by the following formula (3-1), (3-2) or (3-3):

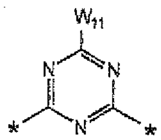
(3-1)

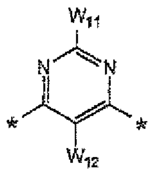
(3-2)

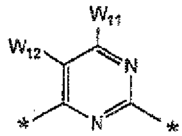
(3-3)

In formulae (3-1) to (3-3), each of $W_{11}$ and $W_{12}$ independently represents a hydrogen atom or a substituent capable of bonding on the heterocyclic ring.

[10] The process for producing an azo pigment or its salt, hydrate or solvate as claimed in any one of [1] to [9], wherein in the azo pigment represented by formula (1) or (2), the substituent represented by X, $X_1$ and $X_2$ is a substituent selected from the substituent group consisting of an alkyloxycarbonyl group having a carbon number of 2 to 12, a carbamoyl group having a carbon number of 1 to 12, and an acyl group having a carbon number of 2 to 12.

[11] An azo pigment represented by formula (1), its tautomer, its tautomer, or a salt, hydrate or solvate thereof, produced by the production process described in any one of [1] to [10] above.

[12] A coloring composition containing at least one of the azo pigment claimed in [11], its tautomer, and a salt, hydrate or solvate thereof.

Effect of the Invention:

According to the present invention, a production process of an azo pigment, where an azo pigment fine particle can be produced with high efficiency (purity and productivity) at a low cost, an azo pigment using the production process, and a coloring composition can be provided.

BRIEF DESCRIPTION OF THE DRAWINGS

[Fig. 1] A view showing the IR spectrum of (Pig-5) synthesized according to Example 1.
[Fig. 2] A view showing the IR spectrum of (Pig-9) synthesized according to Example 2.
[Fig. 3] A view showing the IR spectrum of (Pig-8) synthesized according to Example 6.
[Fig. 4] A view showing the IR spectrum of (Pig-10) synthesized according to Example 7.
[Fig. 5] A view showing the IR spectrum of (Pig-11) synthesized according to Example 8.

[Fig. 6] A view showing the IR spectrum of (Pig-14) synthesized according to Example 9.
[Fig. 7] A view showing the IR spectrum of (Pig-16) synthesized according to Example 10.
[Fig. 8] A view showing the IR spectrum of (Pig-17) synthesized according to Example 11.
[Fig. 9] A view showing the IR spectrum of (Pig-18) synthesized according to Example 12.

BEST MODE FOR CARRYING OUT THE INVENTION

The present invention is described in detail below.

Here, the Hammett's substituent constant σp value used in the present invention is described briefly.

The Hammett's rule is an empirical rule advocated by L.P. Hammett in 1935 so as to quantitatively discuss the effect of substituent on the reaction or equilibrium of benzene derivatives and its propriety is widely admitted at present. The substituent constant determined by the Hammett's rule includes a σp value and a cm value and these values can be found in a large number of general publications and described in detail, for example, in J.A. Dean (compiler), Lange's Handbook of Chemistry, 12th ed., McGraw-Hill (1979), and Kagakuno Ryoiki (Chemistry Region), special number, No. 122, pp. 96-103, Nankodo (1979). In the present invention, each substituent is restricted or described by using the Hammett's substituent constant σp but this does not mean that the substituent is limited only to those having a known value which can be found in the above-described publications. Needless to say, the substituent includes substituents whose value is not known in the publications but when measured based on the Hammett's rule, falls within the range specified. The compounds represented by formulae (1) to (5) of the present invention are not a benzene derivative, but the σp value is used as a measure for showing the electron effect of the substituent irrespective of the substitution position. In the present invention, hereinafter, the σp value is used in this meaning.

[Azo Pigment (not according to the inventive)]

The azo pigment produced by the process of the present invention for producing an azo pigment is represented by the following formula (1).

The azo compound and azo pigment represented by formula (1) of the present invention are described in detail below. The azo pigment may be its salt, hydrate or solvate.

Formula (1):

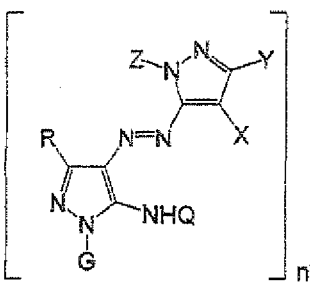

In formula (1), G represents a heterocyclic group, each of R, X, Y, Z and Q independently represents a hydrogen atom or a substituent, n represents an integer of 1 to 4, and the formula represents a dimer through R, X, Y, Z, Q or G when n=2, represents a trimer through R, X, Y, Z, Q or G when n=3, and represents a tetramer through R, X, Y, Z, Q or G when n=4.

Formula (1) is described in more detail below.

In formula (1), each of X, Y and Z independently represents a hydrogen atom or a substituent.

Examples of the substituent represented by X, Y and Z include a linear or branched alkyl group having a carbon number of 1 to 12, a linear or branched aralkyl group having a carbon number of 7 to 18, a linear or branched alkenyl group having a carbon number of 2 to 12, a linear or branched alkynyl group having a carbon number of 2 to 12, a linear or branched cycloalkyl group having a carbon number of 3 to 12, a linear or branched cycloalkenyl group having a carbon number of 3 to 12 (examples of these groups include methyl, ethyl, n-propyl, i-propyl, n-butyl, i-butyl, sec-butyl, tert-butyl, 2-ethylhexyl, 2-methylsulfonylethyl, 3-phenoxypropyl, trifluoromethyl and cyclopentyl), a halogen atom (e.g., chlorine, bromine), an aryl group (e.g., phenyl, 4-tert-butylphenyl, 2,4-di-tert-amylphenyl), a heterocyclic group (e.g., imidazolinyl, pyrazolinyl, triazolinyl, 2-furyl, 2-thienyl, 2-pyridinyl, 2-pyrimidinyl, 4,6-dimethyl-2-pyrimidinyl, 2-benzothiazolinyl), a cyano group, a hydroxyl group, a nitro group, a carboxy group, an amino group, an alkyloxy group (e.g., methoxy, ethoxy, 2-methoxyethoxy, 2-methylsulfonylethoxy), an aryloxy group (e.g., phenoxy, 2-methylphenoxy, 4-tert-butylphenoxy, 3-nitrophenoxy, 3-tert-butyloxycarbonylphenoxy, 3-methoxycarbonylphenyloxy), an acylamino group (e.g., acetamido, benzamido, 4-(3-tert-butyl-4-hydroxyphenoxy)butanamido), an alkylamino group (e.g., methylamino, butylamino, diethylamino, methylbutylamino), an arylamino group (e.g., phenylamino, 2-chloroanilino), a ureido group (e.g., phenylureido, methylureido, N,N-dibutylureido), a sulfamoylamino group (e.g., N,N-dipropylsulfamoylamino), an alkylthio group (e.g., methylthio, octylthio, 2-phenoxyethylthio), an arylthio group (e.g., phenylthio, 2-butoxy-5-tert-octylphenylthio, 2-carboxyphenylthio), an alkyloxycarbonylamino group (e.g., methoxycarbonylamino), alkylsulfonylamino and arylsulfonylamino groups (e.g., methylsulfonylamino, phenylsulfonylamino, p-toluenesulfonylamino), a carbamoyl group (e.g., N-ethylcarbamoyl, N,N-dimethylcarbamoyl, N,N-dibutylcarbamoyl), a sulfamoyl group (e.g., N-ethylsulfamoyl, N,N-dipropylsulfamoyl, N-phenylsulfamoyl), a sulfonyl group (e.g., methylsulfonyl, octylsulfonyl, phenylsulfonyl, p-toluenesulfonyl), an alkyloxycarbonyl group (e.g., methoxycarbonyl, ethoxycarbonyl, butyloxycarbonyl), a heterocyclic oxy group (e.g., 1-phenyltetrazol-5-oxy, 2-tetrahydropyranyloxy), an azo group (e.g., phenylazo, 4-methoxyphenylazo, 4-pivaloylaminophenylazo, 2-hydroxy-4-propanoylphenylazo), an acyloxy group (e.g., acetoxy), a carbamoyloxy group (e.g., N-methylcarbamoyloxy, N-phenylcarbamoyloxy), a silyloxy group (e.g., trimethylsilyloxy, dibutylmethylsilyloxy), an aryloxycarbonylamino group (e.g., phenoxycarbonylamino), an imido group (e.g., N-succinimido, N-phthalimido), a heterocyclic thio group (e.g., 2-benzothiazolylthio, 2,4-di-phenoxy-1,3,5-triazole-6-thio, 2-pyridylthio), a sulfinyl group (e.g., 3-phenoxypropylsulfinyl), a phosphonyl group (e.g., phenoxyphosphonyl, octyloxyphosphonyl, phenylphosphonyl), an aryloxycarbonyl group (e.g., phenoxycarbonyl), an acyl group (e.g., acetyl, 3-phenylpropanoyl, benzoyl), and an ionic hydrophilic group (e.g., carboxyl, sulfo, phosphono, quaternary ammonium).

The substituent represented by X, Y and Z may further have a substituent, and examples of the further substituent are the same as those described for the substituent of X, Y Z in formula (1).

In the case where the azo pigment of the present invention contains an ionic hydrophilic group as the substituent, the azo pigment is preferably a salt with a polyvalent metal cation (for example, magnesium, calcium or barium), more preferably a lake pigment.

In formula (1), the substituent of X is preferably, each independently, for example, an electron-withdrawing group, more preferably an electron-withdrawing group having a Hammett's substituent constant $\sigma p$ value of 0.20 or more, still more preferably an electron-withdrawing group having a $\sigma p$ value of 0.30 or more. As for the upper limit, an electron-withdrawing group having a $\sigma p$ value of 1.0 or less is preferred.

Specific examples of X that is an electron-withdrawing group having a $\sigma p$ value of 0.20 or more include an acyl group, an acyloxy group, a carbamoyl group, an alkyloxycarbonyl group, an aryloxycarbonyl group, a cyano group, a nitro group, a dialkylphosphono group, a diarylphosphono group, a diaryl phosphinyl group, an alkylsulfinyl group, an arylsulfinyl group, an alkylsulfonyl group, an arylsulfonyl group, a sulfonyloxy group, an acylthio group, a sulfamoyl group, a thiocyanate group, a thiocarbonyl group, a halogenated alkyl group, a halogenated alkoxy group, a halogenated aryloxy group, a halogenated alkylamino group, a halogenated alkylthio group, an aryl group substituted with other electron-withdrawing groups having a $\sigma p$ value of 0.20 or more, a heterocyclic group, a halogen atom, an azo group and a selenocyanate group.

X is preferably, each independently, for example, an acyl group having a carbon number of 2 to 12, an acyloxy group having a carbon number of 2 to 12, a carbamoyl group having a carbon number of 1 to 12, an alkyloxycarbonyl group having a carbon number of 2 to 12, an aryloxycarbonyl group having a carbon number of 7 to 18, a cyano group, a nitro group, an alkylsulfinyl group having a carbon number of 1 to 12, an arylsulfinyl group having a carbon number of 6 to 18, an alkylsulfonyl group having a carbon number of 1 to 12, an arylsulfonyl group having a carbon number of 6 to 18, a sulfamoyl group having a carbon number of 0 to 12, a halogenated alkyl group having a carbon number of 1 to 12, a halogenated alkyloxy group having a carbon number of 1 to 12, a halogenated alkylthio group having a carbon number of 1 to 12, a halogenated aryloxy group having a carbon number of 7 to 18, an aryl group having a carbon number of 7 to 18 substituted with other two or more electron-withdrawing groups having a $\sigma p$ value of 0.20 or more, or a 5- to 8-membered ring heterocyclic group having a carbon number of 1 to 18 and containing a nitrogen atom, an oxygen atom or a sulfur atom.

X is more preferably an acyl group having a carbon number of 2 to 12, a carbamoyl group having a carbon number of 1 to 12, an alkyloxycarbonyl group having a carbon number of 2 to 12, an aryloxycarbonyl group having a carbon number of 7 to 18, a cyano group, an alkylsulfonyl group having a carbon number of 1 to 12, an arylsulfonyl group having a carbon number of 6 to 18, or a sulfamoyl group having a carbon number of 0 to 12, still more preferably an acyl group having a carbon number of 2 to 12, a carbamoyl group having a carbon number of 1 to 12, an alkyloxycarbonyl group having a carbon number of 2 to 12, a cyano group, an alkylsulfonyl group having a carbon number of 1 to 8, an arylsulfonyl group having a carbon number of 6 to 12, or a sulfamoyl group having a carbon number of 0 to 8, yet still more preferably an acyl group having a carbon number of 2 to 12, a carbamoyl group having a carbon number of 1 to 12, or an alkyloxycarbonyl group having a carbon number of 2 to 12. More specifically, a cyano group, an acetyl group, a methoxycarbonyl group, an ethoxycarbonyl group, a carbamoyl group or an N,N-dimethylcarbamoyl group is preferred, and a methoxycarbonyl group is most preferred.

In formula (1), Z is preferably, for example, a hydrogen atom, a substituted or unsubstituted alkyl group, a substituted or unsubstituted cycloalkyl group, a substituted or unsubstituted alkenyl group, a substituted or unsubstituted

alkynyl group, a substituted or unsubstituted aralkyl group, a substituted or unsubstituted aryl group, a substituted or unsubstituted heterocyclic group, a substituted or unsubstituted alkylsulfonyl group, a substituted or unsubstituted arylsulfonyl group, or an acyl group. The substituent of Z is more preferably a substituted or unsubstituted alkyl group, a substituted or unsubstituted aryl group, a substituted or unsubstituted heterocyclic group, a substituted or unsubstituted alkylsulfonyl group, a substituted or unsubstituted arylsulfonyl group, or an acyl group, still more preferably a substituted or unsubstituted alkyl group, a substituted or unsubstituted aryl group, or a substituted or unsubstituted heterocyclic group, yet still more preferably a substituted or unsubstituted alkyl group. Examples of the substituent are the same as those described for the substituent of X, Y and Z in formula (1), and among these, a methyl group, a phenyl group, a 2-pyridinyl group, a 2-pyrimidinyl group and a 4,6-dimethyl-2-pyrimidinyl group are preferred.

In formula (1), Y is preferably, each independently, for example, a hydrogen atom, a substituted or unsubstituted alkyl group having a total carbon number of C1 to C12, a substituted or unsubstituted aryl group having a total carbon number of C6 to C18, or a substituted or unsubstituted heterocyclic group having a total carbon number of C4 to C12, more preferably a hydrogen atom or a linear or branched alkyl group having a total carbon number of C1 to C8, still more preferably a hydrogen atom or an alkyl group of C1 to C8, and most preferably a hydrogen atom.

Preferred examples of R and Q in formula (1) are described in detail.

Each of R and Q independently represents a hydrogen atom or a substituent.

In the case where R and Q represent a monovalent substituent, each monovalent substituent is independently, for example, a halogen atom, an alkyl group, a cycloalkyl group, an aralkyl group, an alkenyl group, an alkynyl group, an aryl group, a heterocyclic group, a cyano group, a hydroxyl group, a nitro group, an alkoxy group, an aryloxy group, a silyloxy group, a heterocyclic oxy group, an acyloxy group, a carbamoyloxy group, an alkoxycarbonyloxy group, an aryloxycarbonyloxy group, an amino group (an alkylamino group, an arylamino group), an acylamino group (an amido group), an aminocarbonylamino group (a ureido group), an alkoxycarbonylamino group, an aryloxycarbonylamino group, a sulfamoylamino group, an alkylsulfonylamino group, an arylsulfonylamino group, an alkylthio group, an arylthio group, a heterocyclic thio group, a sulfamoyl group, an alkylsulfinyl group, an arylsulfinyl group, an alkylsulfonyl group, an arylsulfonyl group, an acyl group, an aryloxycarbonyl group, an alkoxycarbonyl group, a carbamoyl group, a phosphino group, a phosphinyl group, a phosphinyloxy group, a phosphinylamino group, a silyl group, an azo group, an imido group or a phosphoryl group, and each may further have a substituent.

Examples of the further substituent are the same as those described for the substituent of X, Y and Z in formula (1).

Each of R and Q is independently preferably a hydrogen atom, a halogen atom, an alkyl group, an aryl group, a heterocyclic group, a cyano group, a hydroxyl group, an alkoxy group, an amido group, a ureido group, an alkylsulfonylamino group, an arylsulfonylamino group, a sulfamoyl group, an alkylsulfonyl group, an arylsulfonyl group, a carbamoyl group, or an alkoxycarbonyl group, more preferably a hydrogen atom, a halogen atom, an alkyl group, an aryl group, a cyano group, a hydroxyl group, an alkylsulfonyl group, an arylsulfonyl group, a heterocyclic group, or an alkoxycarbonyl group, still more preferably a hydrogen atom, an alkyl group, an aryl group, a hydroxyl group, or an alkoxycarbonyl group.

R is yet still more preferably a methyl group, an i-propyl group, or a tert-butyl group, and Q is yet still more preferably a hydrogen atom.

R and Q are described in more detail below.

The halogen atom represented by R and Q indicates a chlorine atom, a bromine atom or an iodine atom. Above all, the halogen atom is preferably a chlorine atom or a bromine atom, more preferably a chlorine atom.

The alkyl group represented by R and Q includes a substituted or unsubstituted alkyl group. The substituted or unsubstituted alkyl group is preferably an alkyl group having from 1 to 30 carbon atoms. Examples of the substituent are the same as those described for the substituent of X, Y and Z in formula (1). Among these, a hydroxy group, an alkoxy group, a cyano group, a halogen atom, a sulfo group (may be in a salt form), and a carboxyl group (may be in a salt form) are preferred. Examples of the alkyl group above include a methyl group, an ethyl group, an n-propyl group, an i-propyl group, an n-butyl group, an i-butyl group, an s-butyl group, a tert-butyl group, an n-octyl group, an eicosyl group, a 2-chloroethyl group, a hydroxyethyl group, a cyanoethyl group and a 4-sulfobutyl group.

The cycloalkyl group represented by R and Q includes a substituted or unsubstituted cycloalkyl group. The substituted or unsubstituted cycloalkyl group is preferably a cycloalkyl group having a carbon number of 5 to 30. Examples of the substituent are the same as those described for the substituent of X, Y and Z in formula (1). Examples of the cycloalkyl group include cyclohexyl, cyclopentyl and 4-n-dodecylcyclohexyl.

The aralkyl group represented by R and Q includes a substituted or unsubstituted aralkyl group. The substituted or unsubstituted aralkyl group is preferably an aralkyl group having from 7 to 30 carbon atoms. Examples of the substituent are the same as those described for the substituent of X, Y and Z in formula (1). Examples of the aralkyl include benzyl and 2-phenethyl.

The alkenyl group represented by R and Q indicates a linear, branched or cyclic, substituted or unsubstituted alkenyl group and is preferably a substituted or unsubstituted alkenyl group having a carbon number of 2 to 30, such as vinyl, allyl, prenyl, geranyl, oleyl, 2-cyclopenten-1-yl and 2-cyclohexen-1-yl.

The alkynyl group represented by R and Q is a substituted or unsubstituted alkynyl group having a carbon number of 2 to 30, such as ethynyl and propargyl.

The aryl group represented by R and Q is a substituted or unsubstituted aryl group having a carbon number of 6 to 30, such as phenyl, p-tolyl, naphthyl, m-chlorophenyl and o-hexadecanoylaminophenyl. Examples of the substituent are the same as those described for the substituent of X, Y and Z in formula (1).

The heterocyclic group represented by R and Q is a monovalent group formed by removing one hydrogen atom from a 5- or 6-membered, substituted or unsubstituted, aromatic or non-aromatic heterocyclic group compound and may be further fused to another ring. The heterocyclic group is preferably a 5- or 6-membered aromatic heterocyclic group having a carbon number of 3 to 30. Examples of the substituent are the same as those described for the substituent of X, Y and Z in formula (1). Examples of the heterocyclic group include, without limiting the substitution position, a pyridine ring, a pyrasine ring, a pyridazine ring, a pyrimidine ring, a triazine ring, a quinoline ring, an isoquinoline ring, a quinazoline ring, a cinnoline ring, a phthalazine ring, a quinoxaline ring, a pyrrole ring, an indole ring, a furan ring, a benzofuran ring, a thiophene ring, a benzothiophene ring, a pyrazole ring, an imidazole ring, a benzimidazole ring, a triazole ring, an oxazole ring, a benzoxazole ring, a thiazole ring, a benzothiazole ring, an isothiazole ring, a benzisothiazole ring, a thiadiazole ring, an isoxazole ring, a benzisoxazole ring, a pyrrolidine ring, a piperidine ring, a piperazine ring, an imidazole ring, and a thiazole ring.

The alkoxy group represented by R and Q includes a substituted or unsubstituted alkoxy group. The substituted or unsubstituted alkoxy group is preferably an alkoxy group having from 1 to 30 carbon atoms. Examples of the substituent are the same as those described for the substituent of X, Y and Z in formula (1). Examples of the alkoxy group include methoxy, ethoxy, isopropoxy, n-octyloxy, methoxyethoxy, hydroxyethoxy and 3-carboxypropoxy.

The aryloxy group represented by R and Q is preferably a substituted or unsubstituted aryloxy group having a carbon number of 6 to 30. Examples of the substituent are the same as those described for the substituent of X, Y and Z in formula (1). Examples of the aryloxy group include phenoxy, 2-methylphenoxy, 4-tert-butylphenoxy, 3-nitrophenoxy and 2-tetradecanoylaminophenoxy.

The silyloxy group represented by R and Q is preferably a silyloxy group having a carbon number of 3 to 20, such as trimethylsilyloxy and tert-butyldimethylsilyloxy.

The heterocyclic oxy group represented by R and Q is preferably a substituted or unsubstituted heterocyclic oxy group having a carbon number of 2 to 30. Examples of the substituent are the same as those described for the substituent of X, Y and Z in formula (1). Examples of the heterocyclic oxy group include 1-phenyltetrazol-5-oxy and 2-tetrahydropyranyloxy.

The acyloxy group represented by R and Q is preferably a formyloxy group, a substituted or unsubstituted alkylcarbonyloxy group having a carbon number of 2 to 30, or a substituted or unsubstituted arylcarbonyloxy group having a carbon number of 6 to 30. Examples of the substituent are the same as those described for the substituent of X, Y and Z in formula (1). Examples of the acyloxy group include formyloxy, acetyloxy, pivaloyloxy, stearoyloxy, benzoyloxy and p-methoxyphenylcabonyloxy.

The carbamoyloxy group represented by R and Q is preferably a substituted or unsubstituted carbamoyloxy group having a carbon number of 1 to 30. Examples of the substituent are the same as those described for the substituent of X, Y and Z in formula (1) . Examples of the carbamoyloxy group include N,N-dimethylcarbamoyloxy, N,N-diethylcarbamoyloxy, morpholinocarbonyloxy, N,N-di-n-octylaminocarbonyloxy and N-n-octylcarbamoyloxy.

The alkoxycarbonyloxy group represented by R and Q is preferably a substituted or unsubstituted alkoxycarbonyloxy group having a carbon number of 2 to 30. Examples of the substituent are the same as those described for the substituent of X, Y and Z in formula (1). Examples of the alkoxycarbonyloxy group include methoxycarbonyloxy, ethoxycarbonyloxy, tert-butoxycarbonyloxy and n-ocrylcarbonyloxy.

The aryloxycarbonyloxy group represented by R and Q is preferably a substituted or unsubstituted aryloxycarbonyloxy group having a carbon number of 7 to 30. Examples of the substituent are the same as those described for the substituent of X, Y and Z in formula (1). Examples of the aryloxycarbonyloxy group include phenoxycarbonyloxy, p-methoxyphenoxycarbonyloxy and p-n-hexadecyloxyphenoxycarbonyloxy.

The amino group represented by R and Q is preferably a substituted or unsubstituted alkylamino group having a carbon number of 1 to 30, or a substituted or unsubstituted arylamino group having a carbon number of 6 to 30. Examples of the substituent are the same as those described for the substituent of X, Y and Z in formula (1). Examples of the amino group include amino, methylamino, dimethylamino, anilino, N-methyl-anilino, diphenylamino, hydroxyethylamino, carboxyethylamino, sulfoethylamino and 3,5-dicarboxyanilino.

The acylamino group represented by R and Q is preferably a formylamino group, a substituted or unsubstituted alkylcarbonylamino group having a carbon number of 1 to 30, or a substituted or unsubstituted arylcarbonylamino group having a carbon number of 6 to 30. Examples of the substituent are the same as those described for the substituent of X, Y and Z in formula (1). Examples of the acylamino group include formylamino, acetylamino, pivaloylamino, lauroylamino, benzoylamino and 3,4,5-tri-n-octyloxyphenylcarbonylamino.

The aminocarbonylamino group represented by R and Q is preferably a substituted or unsubstituted aminocarbonylamino group having a carbon number of 1 to 30. Examples of the substituent are the same as those described for the substituent of X, Y and Z in formula (1). Examples of the aminocarbonylamino group include carbamoylamino, N,N-dimethylaminocarbonylamino, N,N-diethylaminocarbonylamino and morpholinocarbonylamino.

The alkoxycarbonylamino group represented by R and Q is preferably a substituted or unsubstituted alkoxycarbonylamino group having a carbon number of 2 to 30. Examples of the substituent are the same as those described for the substituent of X, Y and Z in formula (1) . Examples of the alkoxycarbonylamino group include methoxycarbonylamino, ethoxycarbonylamino, tert-butoxycarbonylamino, n-octadecyloxycarbonylamino and N-methyl-methoxycarbonylamino.

The aryloxycarbonylamino group represented by R and Q is preferably a substituted or unsubstituted aryloxycarbonylamino group having a carbon number of 7 to 30. Examples of the substituent are the same as those described for the substituent of X, Y and Z in formula (1). Examples of the aryloxycarbonylamino group include phenoxycarbonylamino group, p-chlorophenoxycarbonylamino and m-n-octyloxyphenoxycarbonylamino.

The sulfamoylamino group represented by R and Q is preferably a substituted or unsubstituted sulfamoylamino group having a carbon number of 0 to 30. Examples of the substituent are the same as those described for the substituent of X, Y and Z in formula (1). Examples of the sulfamoylamino group include sulfamoylamino, N,N-dimethylaminosulfonylamino and N-n-octylaminosulfonylamino.

The alkylsulfonylamino and arylsulfonylamino groups represented by R and Q are preferably a substituted or unsubstituted alkylsulfonylamino group having a carbon number of 1 to 30 and a substituted or unsubstituted arylsulfonylamino group having a carbon number of 6 to 30. Examples of the substituent are the same as those described for the substituent of X, Y and Z in formula (1) . Examples of the alkylsulfonylamino group and arylsulfonylamino group include methylsulfonylamino, butylsulfonylamino, phenylsulfonylamino, 2,3,5-trichlorophenylsulfonylamino and p-methylphenylsulfonylamino.

The alkylthio group represented by R and Q is preferably a substituted or unsubstituted alkylthio group having a carbon number of 1 to 30. Examples of the substituent are the same as those described for the substituent of X, Y and Z in formula (1). Examples of the alkylthio group include methylthio, ethylthio group and n-hexadecylthio.

The arylthio group represented by R and Q is preferably a substituted or unsubstituted arylthio group having a carbon number of 6 to 30. Examples of the substituent are the same as those described for the substituent of X, Y and Z in formula (1). Examples of the arylthio group include phenylthio, p-chlorophenylthio and m-methoxyphenylthio.

The heterocyclic thio group represented by R and Q is preferably a substituted or unsubstituted heterocyclic thio group having a carbon number of 2 to 30. Examples of the substituent are the same as those described for the substituent of X, Y and Z in formula (1). Examples of the heterocyclic thio group include 2-benzothiazolylthio and 1-phenyltetrazolinyl-5-ylthio.

The sulfamoyl group represented by R and Q is preferably a substituted or unsubstituted sulfamoyl group having a carbon number of 0 to 30. Examples of the substituent are the same as those described for the substituent of X, Y and Z in formula (2). Examples of the sulfamoyl group include N-ethylsulfamoyl, N-(3-dodecyloxypropyl)sulfamoyl, N,N-dimethylsulfamoyl, N-acetylsulfamoyl, N-benzoylsulfamoyl and N-(N'-phenylcarbamoyl)sulfamoyl).

The alkylsulfinyl and arylsulfinyl groups represented by R and Q are preferably a substituted or unsubstituted alkylsulfinyl group having a carbon number of 1 to 30, and a substituted or unsubstituted arylsulfinyl group having a carbon number of 6 to 30. Examples of the substituent are the same as those described for the substituent of X, Y and Z in formula (1). Examples of the alkylsulfinyl and arylsulfinyl groups include methylsulfinyl, ethylsulfinyl, phenylsulfinyl and p-methylphenylsulfinyl.

The alkylsulfonyl and arylsulfonyl groups represented by R and Q are preferably a substituted or unsubstituted alkylsulfonyl group having a carbon number of 1 to 30, and a substituted or unsubstituted arylsulfonyl group having a carbon number of 6 to 30. Examples of the substituent are the same as those described for the substituent of X, Y and Z in formula (1). Examples of the alkylsulfonyl and arylsulfonyl groups include methylsulfonyl, ethylsulfonyl, phenylsulfonyl and p-toluenesulfonyl.

The acyl group represented by R and Q is preferably a formyl group, a substituted or unsubstituted alkylcarbonyl group having a carbon number of 2 to 30, a substituted or unsubstituted arylcarbonyl group having a carbon number of 7 to 30, or a substituted or unsubstituted heterocyclic carbonyl group having a carbon number of 4 to 30 with the carbonyl group being bonded through carbon atom. Examples of the substituent are the same as those described for the substituent of X, Y and Z in formula (1). Examples of the acyl group include acetyl, pivaloyl, 2-chloroacetyl, stearoyl, benzoyl, p-n-octyloxyphenylcarbonyl, 2-pyridylcarbonyl and 2-furylcarbonyl.

The aryloxycarbonyl group represented by R and Q is preferably a substituted or unsubstituted aryloxycarbonyl group having a carbon number of 7 to 30. Examples of the substituent are the same as those described for the substituent of X, Y and Z in formula (1). Examples of the aryloxycarbonyl group include phenoxycarbonyl, o-chlorophenoxycarbonyl, m-nitrophenoxycarbonyl and p-tert-butylphenoxycarbonyl.

The alkoxycarbonyl group represented by R and Q is preferably a substituted or unsubstituted alkoxycarbonyl group having a carbon number of 2 to 30. Examples of the substituent are the same as those described for the substituent

of X, Y and Z in formula (1). Examples of the alkoxycarbonyl group include methoxycarbonyl, ethoxycarbonyl, tert-butoxycarbonyl and n-octadecyloxycarbonyl.

The carbamoyl group represented by R and Q is preferably a substituted or unsubstituted carbamoyl group having a carbon number of 1 to 30. Examples of the substituent are the same as those described for the substituent of X, Y and Z in formula (1). Examples of the carbamoyl group include carbamoyl, N-methylcarbamoyl, N,N-dimethylcarbamoyl, N,N-di-n-octylcarbamoyl and N-(methylsulfonyl) carbamoyl.

The phosphino group represented by R and Q is preferably a substituted or unsubstituted phosphino group having a carbon number of 2 to 30. Examples of the substituent are the same as those described for the substituent of X, Y and Z in formula (1). Examples of the phosphino group include dimethylphosphino, diphenylphosphino and methylphenoxyphosphino.

The phosphinyl group represented by R and Q is preferably a substituted or unsubstituted phosphinyl group having a carbon number of 2 to 30. Examples of the substituent are the same as those described for the substituent of X, Y and Z in formula (1) . Examples of the phosphinyl group include phosphinyl, dioctyloxyphosphinyl and diethoxyphosphinyl.

The phosphinyloxy group represented by R and Q is preferably a substituted or unsubstituted phosphinyloxy group having a carbon number of 2 to 30. Examples of the substituent are the same as those described for the substituent of X, Y and Z in formula (1). Examples of the phosphinyloxy group include diphenoxyphosphinyloxy and dioctyloxyphosphinyloxy.

The phosphinylamino group represented by R and Q is preferably a substituted or unsubstituted phosphinylamino group having a carbon number of 2 to 30. Examples of the substituent are the same as those described for the substituent of X, Y and Z in formula (1). Examples of the phosphinylamino group include dimethoxyphosphinylamino and dimethylaminophosphinylamino.

The silyl group represented by R and Q is preferably a substituted or unsubstituted silyl group having a carbon number of 3 to 30. Examples of the substituent are the same as those described for the substituent of X, Y and Z in formula (1). Examples of the silyl group include trimethylsilyl, tert-butyldimethylsilyl and phenyldimethylsilyl.

Examples of the azo group represented by R and Q include phenylazo, 4-methoxyphenylazo, 4-pivaloylaminophenylazo and 2-hydroxy-4-propanoylphenylazo.

Examples of the imido group represented by R and Q include N-succinimido and N-phthalimido.

The phosphoryl group represented by R and Q includes a phosphoryl group having a substituent and an unsubstituted phosphoryl group. Examples of the phosphoryl group include a phenoxyphosphoryl group and a phenylphosphoryl group.

The ionic hydrophilic group represented by R and Q include, for example, a sulfo group, a carboxyl group, a phosphono group, and a quaternary ammonium group. The ionic hydrophilic group is preferably a carboxyl group or a sulfo group. The carboxyl group and the sulfo group may be in a salt state, and examples of the counter ion for forming a salt include an ammonium ion, an alkali metal ion (e.g., calcium ion, barium ion) and an organic cation (e.g., tetramethylguanidium ion).

In the case where R and Q represent a divalent group, the divalent group is preferably an alkylene group (e.g., methylene, ethylene, propylene, butylene, pentylene), an alkenylene group (e.g., ethenylene, propenylene), an alkynylene group (e.g., ethynylene, propynylene), an arylene group (e.g., phenylene, naphthylene), a divalent heterocyclic group (e.g., 6-chloro-1,3,5-triazine-2,4-diyl, pyrimidine-2,4-diyl, pyrimidine-4,6-diyl, quinoxaline-2,3-diyl, pyridazine-3,6-diyl), -O-, -CO-, -NR'- (wherein R' is a hydrogen atom, an alkyl group or an aryl group), -S-, - $SO_2$-, -SO-, or a combination thereof (e.g., -$NHCH_2CH_2NH$-, - NHCONH-).

The alkylene group, alkenylene group, alkynylene group, arylene group and divalent heterocyclic group and the alkyl group or aryl group of R may have a substituent.

Examples of the substituent are the same as those described for the substituent of X, Y and Z in formula (1).

The alkyl group and aryl group of $R^1$ have the same meanings as those described for the substituent when R and Q are an alkyl group or an aryl group.

The divalent group is more preferably an alkylene group having a carbon number of 10 or less, an alkenylene group having a carbon number of 10 or less, an alkynylene group having a carbon number of 10 or less, an arylene group having a carbon number of 6 to 10, a divalent heterocyclic group, -S-, -SO-, -$SO_2$-, or a combination thereof (e.g., -$SCH_2CH_2S$-, -$SCH_2CH_2CH_2S$-).

The total carbon number of the divalent linking group is preferably from 0 to 50, more preferably from 0 to 30, and most preferably from 0 to 10.

In the case where R and Q represent a trivalent group, the trivalent group is preferably a trivalent hydrocarbon group, a trivalent heterocyclic group, >N-, or its combination with a divalent group (e.g., >$NCH_2CH_2NH$-, >NCONH-).

The total carbon number of the trivalent linking group is preferably from 0 to 50, more preferably from 0 to 30, and most preferably from 0 to 10.

In formula (1), G represents a heterocyclic group and is preferably a 5- or 6-membered heterocyclic group,

more preferably a 5- or 6-membered substituted or unsubstituted, aromatic or non-aromatic heterocyclic group, which may be further fused to another ring. G is still more preferably a 5- or 6-membered aromatic heterocyclic group having a carbon number of 3 to 30 and most preferably a 6-membered nitrogen-containing heterocyclic group.

Examples of the heterocyclic group represented by G include, without limiting the substitution position, a pyridine ring, a pyrazine ring, a pyridazine ring, a pyrimidine ring, a triazine ring, a quinoline ring, an isoquinoline ring, a quinazoline ring, a cinnoline ring, a phthalazine ring, a quinoxaline ring, a pyrrole ring, an indole ring, a furan ring, a benzofuran ring, a thiophene ring, a benzothiophene ring, a pyrazole ring, an imidazole ring, a benzimidazole ring, a triazole ring, an oxazole ring, a benzoxazole ring, a thiazole ring, a benzothiazole ring, an isothiazole ring, a benzisothiazole ring, a thiadiazole ring, an isoxazole ring, a benzisoxazole ring, a pyrrolidine ring, a piperidine ring, a piperazine ring, an imidazole ring, a thiazole ring, and a sulfolane ring.

Among these, a pyridine ring, a pyrazine ring, a pyrimidine ring, a pyridazine ring and a triazine ring are preferred, a pyridine ring, a pyrimidine ring, a pyridazine ring and a triazine ring are more preferred, and a pyridine ring, a pyrimidine ring and a triazine ring are still more preferred.

Above all, the heterocyclic group is preferably a heterocyclic group represented by the following formula (3-1), (3-2) or (3-3) :

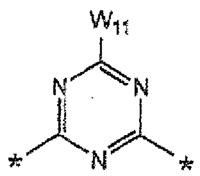
(3-1)

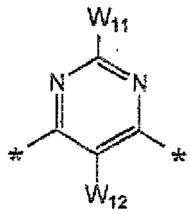
(3-2)

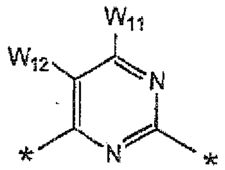
(3-3)

In formulae (3-1) to (3-3), each of $W_{11}$ and $W_{12}$ independently represents a hydrogen atom or a substituent capable of bonding on the heterocyclic ring.

In the case where the heterocyclic group constituted by G is a group which can further have a substituent, examples of the substituent (the substituent as $W_{11}$ or $W_{12}$) are the same as those described for the substituent of X, Y and Z in formula (1). Examples are the same as those described for the substituent when the heterocyclic group represented by formula (1) is a group which can further have a substituent.

As for the combination of preferred substituents in the pigment represented by formula (1) of the present invention, a compound where at least one of various substituents is the above-described preferred group is preferred, a compound where a larger number of various substituents are the above-described preferred groups is more preferred, and a compound where all substituents are the above-described preferred groups is most preferred.

The particularly preferred combination as the azo pigment represented by formula (1) of the present invention includes the following (i) to (vi).

(i) G is preferably a 5- or 6-membered nitrogen-containing heterocyclic group, more preferably an s-triazine ring, a pyrimidine ring, a pyridazine ring, a pyrazine ring, a pyridine ring, an imidazole ring, a pyrazole ring or a pyrrole ring, still more preferably an s-triazine ring, a pyridine ring, a pyrimidine ring or a pyridazine ring, and most preferably a 4,6-pyrimidine ring or an s-triazine ring.

(ii) R is preferably a substituted or unsubstituted alkyl group having a total carbon number of C1 to C12, a substituted or unsubstituted aryl group having a total carbon number of C6 to C18, or a substituted or unsubstituted heterocyclic group having a total carbon number of C4 to C12, more preferably a linear or branched alkyl group having a total carbon number of C1 to C8, still more preferably a methyl group or a secondary or tertiary alkyl group, yet still more preferably a methyl group, an i-propyl group or a tert-butyl group, and most preferably a tert-butyl group.

(iii) Q is preferably, each independently, a hydrogen atom, a substituted or unsubstituted alkyl group, a substituted or unsubstituted acyl group, a substituted or unsubstituted alkylsulfonyl group, or a substituted or unsubstituted arylsulfonyl group, more preferably a hydrogen atom, a substituted or unsubstituted alkyl group, or a substituted or unsubstituted acyl group, still more preferably a hydrogen atom.

(iv) X is preferably an acyl group having a carbon number of 2 to 12, a carbamoyl group having a carbon number of 1 to 12, an alkyloxycarbonyl group having a carbon number of 2 to 12, a cyano group, an alkylsulfonyl group having a carbon number of 1 to 8, an arylsulfonyl group having a carbon number of 6 to 12, or a sulfamoyl group having a carbon number of 0 to 8, more preferably a cyano group, an acetyl group, a methoxycarbonyl group, an ethoxycarbonyl group, a carbamoyl group, or an N,N-dimethylcarbamoyl group, still more preferably a cyano group or a methoxycarbonyl group, and most preferably a methoxycarbonyl group.

(v) Y is preferably a hydrogen atom, a substituted or unsubstituted alkyl group having a total carbon number of C1 to C12, a substituted or unsubstituted aryl group having a total carbon number of C6 to C18, or a substituted or unsubstituted heterocyclic group having a total carbon number of C4 to C12, more preferably a hydrogen atom or a linear or branched alkyl group having a total carbon number of C1 to C8, still more preferably a hydrogen atom or an alkyl group of C1 to C8, yet still more preferably a hydrogen atom or a methyl group, and most preferably a hydrogen atom.

(vi) Z is preferably a hydrogen atom, a substituted or unsubstituted alkyl group, a substituted or unsubstituted cycloalkyl group, a substituted or unsubstituted alkenyl group, a substituted or unsubstituted alkynyl group, a substituted or unsubstituted aralkyl group, a substituted or unsubstituted aryl group, or a substituted or unsubstituted heterocyclic group. The substituent of Z is more preferably a substituted or unsubstituted alkyl group, among others, an alkyl group having a carbon number of 1 to 3, an unsubstituted aryl group, or a substituted or unsubstituted heterocyclic group, still more preferably a methyl group, a phenyl group, a 2-pyridinyl group, a 2-pyrimidinyl group, or a 4,6-dimethyl-2-pyrimidinyl group, and most preferably a methyl group.

Out of azo compounds and azo pigments represented by formula (1), an azo compound and an azo pigment represented by the following formula (2) are preferred.

Formula (2) is described in detail below.

Formula (2)

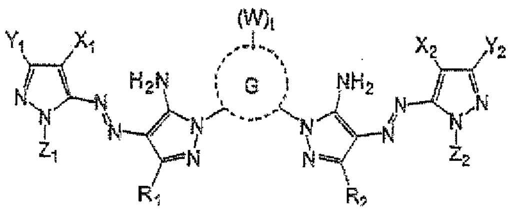

In formula (2), each of $R_1$ and $R_2$ independently represents a hydrogen atom or a substituent, each of $X_1$ and $X_2$ independently represents an electron-withdrawing group having a Hammett's σp value of 0.2 or more, each of $Y_1$ and $Y_2$ independently represents a hydrogen atom or a monovalent substituent, each of $Z_1$ and $Z_2$ independently represents a monovalent substituent, G represents a 5- or 6-membered heterocyclic group, W represents a substituent capable of bonding to the heterocyclic group constituted by G, and t represents an integer of 0 to 3.

$R_1$, $R_2$, $X_1$, $X_2$, $Y_1$, $Y_2$, $Z_1$, $Z_2$, G, W and t are described in more detail below.

Each of the substituents of $R_1$, and $R_2$ independently has the same meaning as the substituent of R in formula (1), and preferred examples are also the same.

Each of the substituents of $X_1$ and $X_2$ independently has the same meaning as the substituent of X in formula (1), and preferred examples are also the same.

Each of the substituents of $Y_1$ and $Y_2$ independently has the same meaning as the substituent of Y in formula (1), and preferred examples are also the same.

Each of the substituents of $Z_1$ and $Z_2$ independently has the same meaning as the substituent of Z in formula (1), and preferred examples are also the same.

The substituent of G has the same meaning as the substituent of G in formula (1), and preferred examples are also the same.

W represents, when a plurality of W are present, each independently represents, a substituent.

The substituent of W has the same meaning as the substituent of R and Q in formula (1).

Above all, W is preferably, each independently, a halogen atom, an alkyl group, an alkoxy group, an aryl group, a heterocyclic group, a cyano group, a hydroxyl group, an alkoxy group, an amino group, an amido group, a ureido group, an alkylsulfonylamino group, an arylsulfonylamino group, a sulfamoyl group, an alkylsulfonyl group, an arylsulfonyl group, a carbamoyl group, or an alkoxycarbonyl group, more preferably a hydrogen atom, a halogen atom, an alkyl group, an alkoxy group, an aryl group, a cyano group, a hydroxyl group, an amino group, an alkylsulfonyl group, an arylsulfonyl group, a heterocyclic group, or an alkoxycarbonyl group, still more preferably an alkyl group, an alkoxy group, an aryl group, a hydroxyl group, an amino group, or an alkoxycarbonyl group, and most preferably an alkoxy group, a hydroxyl group, or an amino group.

In formula (2), t represents an integer of 0 to 3, preferably an integer of 0 to 2, more preferably 1 or 2, and most preferably 1.

As for the combination of preferred substituents in the azo compound and azo pigment represented by formula

(2) of the present invention, a compound where at least one of various substituents is the above-described preferred group is preferred, a compound where a larger number of various substituents are the above-described preferred groups is more preferred, and a compound where all substituents are the above-described preferred groups is most preferred.

The particularly preferred combination as the azo compound and azo pigment represented by formula (2) of the present invention includes the following (i) to (vii).

(i) G is preferably a 5- or 6-membered nitrogen-containing heterocyclic group, more preferably a 6-membered nitrogen-containing heterocyclic group. More specifically, G is preferably an s-triazine ring, a pyrimidine ring, a pyridazine ring, a pyrazine ring, a pyridine ring, an imidazole ring, a pyrazole ring or a pyrrole ring, more preferably an s-triazine ring, a pyridine ring, a pyrimidine ring or a pyridazine ring, and most preferably a 4,6-pyrimidine ring or an s-triazine ring.

(ii) Each of $R_1$, and $R_2$ is preferably a substituted or unsubstituted alkyl group having a total carbon number of C1 to C12, a substituted or unsubstituted aryl group having a total carbon number of C6 to C18, or a substituted or unsubstituted heterocyclic group having a total carbon number of C4 to C12, more preferably a linear or branched alkyl group having a total carbon number of C1 to C8, still more preferably a methyl group or a secondary or tertiary alkyl group, yet still more preferably a methyl group, an i-propyl group or a tert-butyl group, and most preferably a tert-butyl group.

(iii) Each of $X_1$ and $X_2$ is preferably an acyl group having a carbon number of 2 to 12, a carbamoyl group having a carbon number of 1 to 12, an alkyloxycarbonyl group having a carbon number of 2 to 12, a cyano group, an alkylsulfonyl group having a carbon number of 1 to 8, an arylsulfonyl group having a carbon number of 6 to 12, or a sulfamoyl group having a carbon number of 0 to 8, more preferably an acetyl group, a methoxycarbonyl group, an ethoxycarbonyl group, a carbamoyl group, or an N,N-dimethylcarbamoyl group, and most preferably a methoxycarbonyl group.

(iv) Each of $Y_1$ and $Y_2$ is preferably a hydrogen atom, a substituted or unsubstituted alkyl group having a total carbon number of C1 to C12, a substituted or unsubstituted aryl group having a total carbon number of C6 to C18, or a substituted or unsubstituted heterocyclic group having a total carbon number of C4 to C12, more preferably a hydrogen atom or a linear or branched alkyl group having a total carbon number of C1 to C8, still more preferably a hydrogen atom or an alkyl group having a total carbon number of C1 to C8, yet still more preferably a hydrogen atom or a methyl group, and most preferably a hydrogen atom.

(v) Each of $Z_1$ and $Z_2$ is preferably a hydrogen atom, a substituted or unsubstituted alkyl group, a substituted or unsubstituted cycloalkyl group, a substituted or unsubstituted alkenyl group, a substituted or unsubstituted alkynyl group, a substituted or unsubstituted aralkyl group, a substituted or unsubstituted aryl group, or a substituted or unsubstituted heterocyclic group, more preferably a substituted or unsubstituted alkyl group, or a substituted or unsubstituted aryl group, still more preferably an alkyl group having a carbon number of 1 to 3, or an unsubstituted aryl group, yet still more preferably a methyl group or a phenyl group, and most preferably a methyl group.

(vi) W is preferably a hydroxyl group, a cyano group, a substituted or unsubstituted carbamoyl group, a substituted or unsubstituted amino group, a substituted or unsubstituted alkoxy group, a substituted or unsubstituted aryloxy group, a substituted or unsubstituted alkylthio group, a substituted or unsubstituted arylthio group, or a carbonyl group (-CO-), more preferably a hydroxyl group, a substituted or unsubstituted amino group, a substituted or unsubstituted alkoxy group, a substituted or unsubstituted alkylthio group, or a carbonyl group, still more preferably a hydroxyl group, a methoxy group, an amino group, or a dimethylamino group, yet still more preferably a hydroxyl group, a methoxy group or an amino group, and most preferably a methoxy group.

(vii) t represents an integer of 0 to 3, preferably an integer of 0 to 2, more preferably 1 or 2, and most preferably 1.

The azo compound represented by formulae (1) and (2) may take several kinds of tautomer forms in terms of the chemical structure but preferably has a canonical formula represented by formula (1) or (2) in view of dispersibility and dispersion stability in use as a pigment. A mixture containing a tautomer other than the structures represented by formulae (1) and (2) may be also used, but the content of the tautomer is preferably 30% or less, more preferably 10% or less, and most preferably 0%.

Specific examples (Azo Compounds Pig-1 to Pig-25) represented by formulae (1) and (2) are illustrated below, but the azo compound of the present invention is not limited to these examples.

In the following specific examples, the structure is shown in the form of a canonical formula out of several kinds of tautomers that are possible in terms of chemical structure, but the compound may be of course used also as a mixture containing a tautomer other than the structure shown.

(Pig-1)

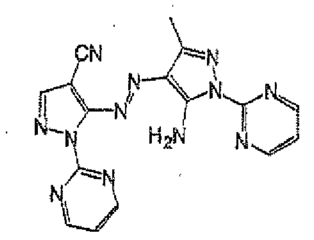

(Pig-2)

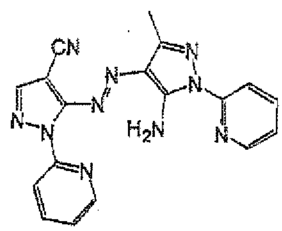

(Pig-3)

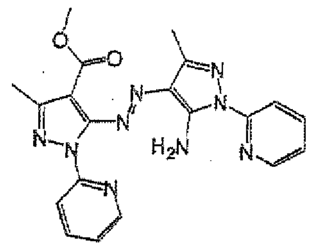

(Pig-4)

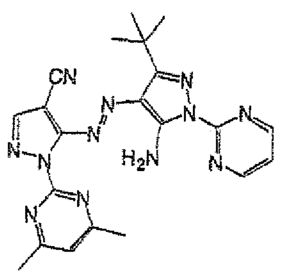

(Pig-5)

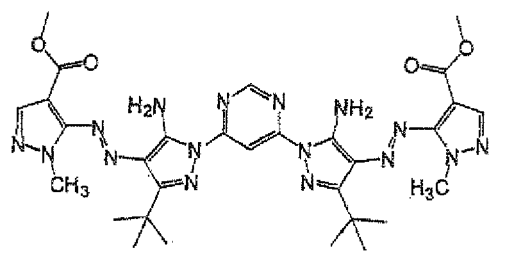

(Pig-6)

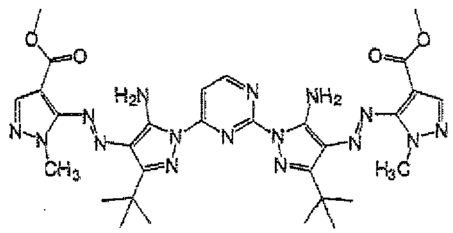

(Pig-7)

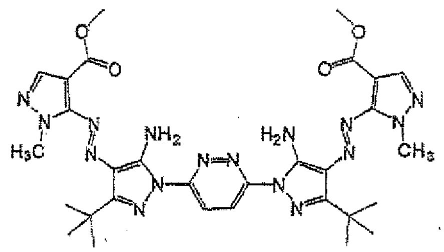

(Pig-8)

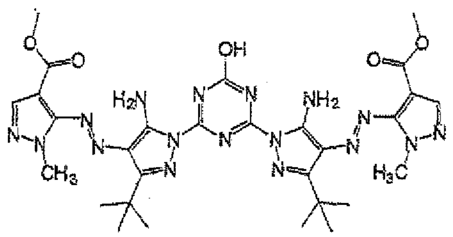

(Pig-9)

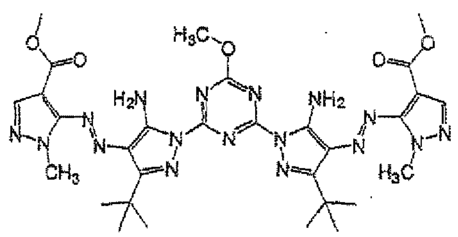

(Pig-10)

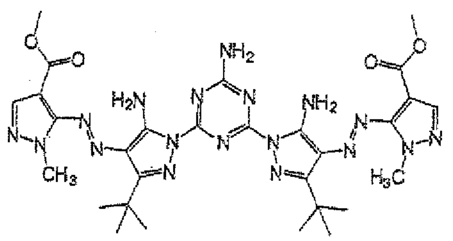

(Pig-11)

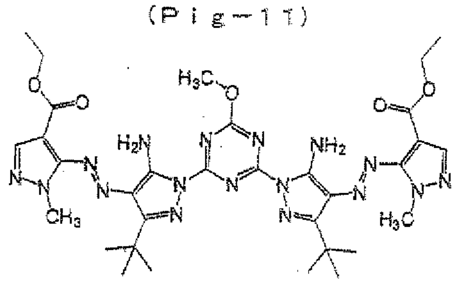

(Pig-12)

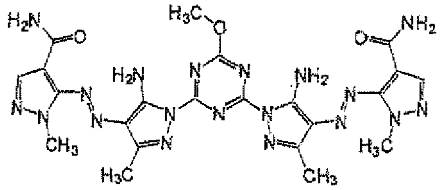

(Pig-13)

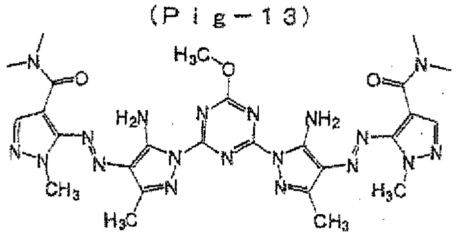

(Pig-14)

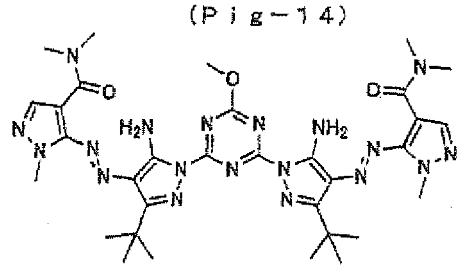

(Pig-15)

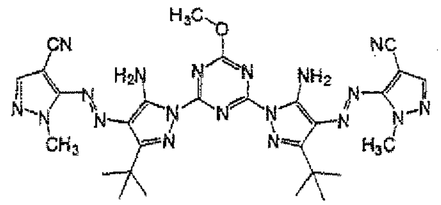

(Pig-16)

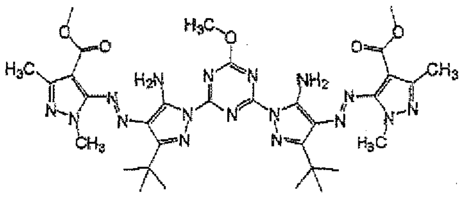

(Pig-17)

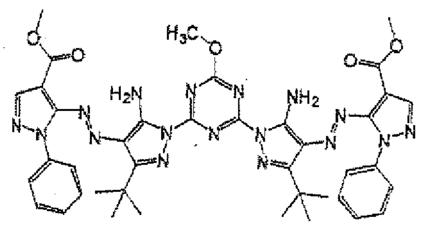

(Pig-18)

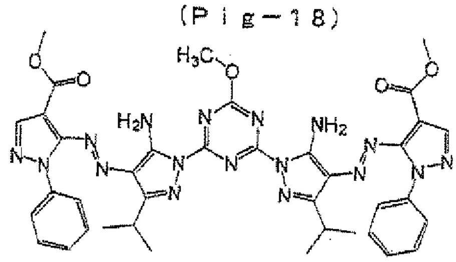

(Pig-19)

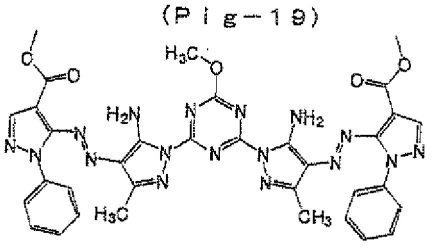

(Pig-20)

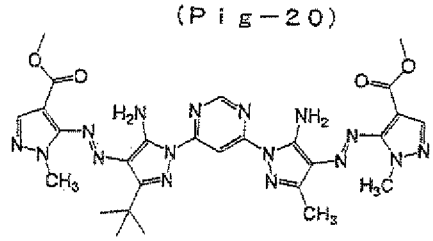

(Pig-21)

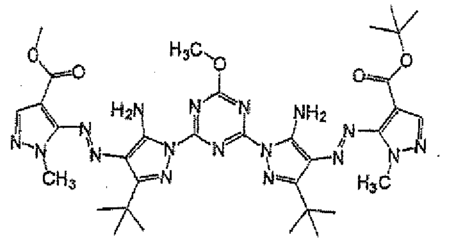

(Pig-22)

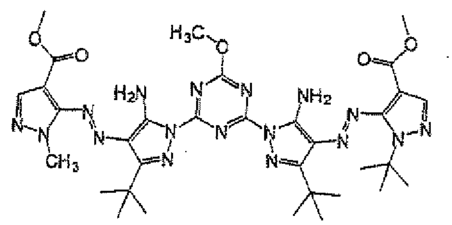

(Pig-23)

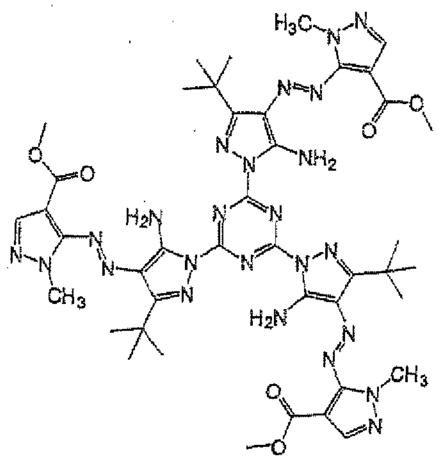

(Pig-24)

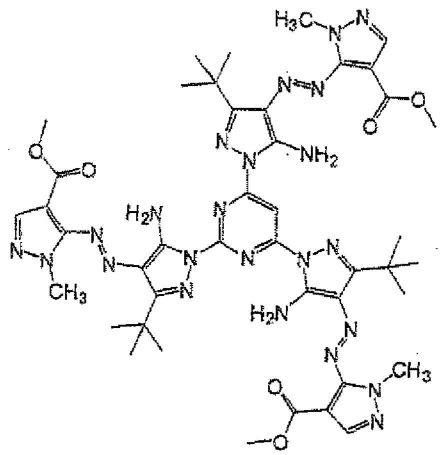

(Pig-25)

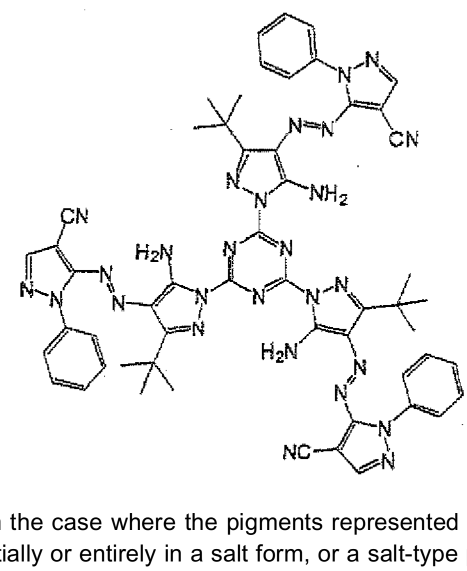

In the present invention, in the case where the pigments represented by formulae (1) and (2) have an acid radical, the acid radical may be partially or entirely in a salt form, or a salt-type pigment and a free acid-type pigment may be mixed. Examples of the salt form include a salt of alkali metal such as Na, Li and K, a salt of ammonium which may be substituted with an alkyl group or a hydroxyalkyl group, and a salt of organic amine. Examples of the organic amine include a lower alkylamine, a hydroxy-substituted lower alkylamine, a carboxy-substituted lower alkylamine, and a polyamine containing from 2 to 10 alkylene imine units having a carbon number of 2 to 4. In the case of such a salt form, the number of kinds thereof is not limited to one, and a plurality of kinds of salt forms may be mixed.

In the pigments represented by formulae (1) and (2), when a plurality of acid radicals are contained per molecule, the plurality of acid radicals may be in a salt form or an acid form and may be different from each other. Also, the pigments may be a hydrate containing water molecules in the crystal or a solvate containing a solvent (for example, alcohols such as methanol, ethanol, 2-propanol and tert-butyl alcohol, or aprotic solvents such as dimethylsulfoxide, dimethylformamide, dimethylacetamide and N-methylpyrrolidone).

In the present invention, with respect to the pigments represented by formulae (1) and (2), a tautomer thereof (for example, an azo-hydrazone tautomer) is also included in these formulae.

The production process of the present invention is described in detail below.

The production process of an azo pigment of the present invention comprises (a) a step of mixing a diazotizing agent and an amino compound, (b) a step of performing a reaction by mixing the reaction product obtained in the step (a) with a coupling component to obtain a solution having dissolved therein at least a part of the azo compound represented by the following formula (1) produced by the reaction, and (c) a step of mixing the solution obtained in the step (b) with a poor solvent for the azo compound represented by the following formula (1) to crystallize a pigment represented by the following formula (1):

Formula (1):

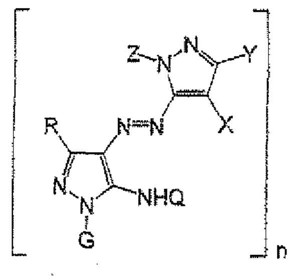

In formula (1), G represents a heterocyclic group, each of R, X, Y, Z and Q independently represents a hydrogen atom or a substituent, n represents an integer of 1 to 4, and the formula represents a dimer through R, X, Y, Z, Q or G when n=2, represents a trimer through R, X, Y, Z, Q or G when n=3, and represents a tetramer through R, X, Y, Z, Q or G when n=4.

The step (a) according to the present invention is described in detail.

In the step (a), a diazotizing agent and an amino compound are mixed, whereby a diazonium compound is derived due to a reaction between the amino compound and the diazotizing agent. This reaction is preferably performed in an acid-containing solute. In the description of the present invention, the solution containing a diazonium compound is referred to as a "diazonium compound liquid preparation". The method for mixing an amino compound, an acid and a diazotizing agent is not particularly limited but it is preferred to add a diazotizing agent to a solution containing an amino compound and an acid. The diazotizing agent in the step (a) is used to drive a diazonium compound from an amino compound and is not limited as long as the compound has such an action. Representative diazotizing agents include nitrous acid esters (for example, isopentyl nitrite), a nitrite (for example, sodium nitrite and potassium nitrite), isoamyl nitrite, and nitrosylsulfuric acid. Among these, sodium nitrite, potassium nitrite and nitrosylsulfuric acid are preferred, and nitrosylsulfuric acid is more preferred because a diazonium compound can be stably and efficiently prepared.

The acid used in the step (a) means an acid capable of even slightly dissolving the amino compound if not complete dissolution and is preferably an acid capable of completely dissolving the amino compound. As the acid, an inorganic acid and an organic acid can be used, and the inorganic acid includes hydrochloric acid, phosphoric acid and sulfuric acid and is preferably phosphoric acid or sulfuric acid, more preferably sulfuric acid. The organic acid includes formic acid, acetic acid, propionic acid and methanesulfonic acid and is preferably acetic acid, propionic acid or methanesulfonic acid, more preferably acetic acid or propionic acid. These acids may be used individually or as a mixture. The mixed acid includes phosphoric acid/acetic acid, sulfuric acid/acetic acid, methanesulfonic acid/acetic acid, and acetic acid/propionic acid and is preferably phosphoric acid/acetic acid, sulfuric acid/acetic acid, sulfuric acid/acetic acid/propionic acid, or acetic acid/propionic acid, more preferably sulfuric acid/acetic acid or acetic acid/propionic acid. The mass ratio in such a mixed acid is preferably 1/(0.1 to 20), more preferably 1/(0.5 to 10), still more preferably 1/(1 to 10).

In the step (a), the amount added of the acid is, in terms of mass ratio, from 1 to 100 times, preferably from 2 to 50 times, more preferably from 3 to 25 times, based on the amino compound. When the mass ratio is 1 times or more, stirrability is improved and a diazonium compound can be more unfailingly derived. On the other hand, when the mass ratio is 100 times or less, productivity is enhanced and this is profitable.

Also, in the step (a), the amount of the diazotizing agent is, in terms of molar ratio, from 1.0 to 20 times, preferably from 1.0 to 10 times, more preferably from 1.0 to 5 times, based on the amino compound. When the molar ratio of the diazotizing agent is 1 times or more based on the amino compound, a diazonium compound can be more unfailingly derived, and when the molar ratio is 20 times or less, the diazonium compound can be prevented from decomposition by a side reaction.

In the step (a), mixing of a diazotizing agent and an amino compound is preferably performed at 50°C or less, more preferably at 40°C or less, still more preferably at 30°C or less. Preparation of a diazo solution at 50°C or more may disadvantageously involve decomposition of the diazotizing agent. The stirring time to derive a diazonium compound is preferably from 0.3 to 10 hours, more preferably from 0.5 to 5 hours, still more preferably from 1 to 3 hours. When the stirring time is 0.3 hours or more, a diazonium compound is liable to be completely derived, and when the stirring time is 10 hours or less, decomposition of the diazonium compound hardly occurs. Also, a normal stirrer is used for mixing, and there is no particular limitation thereon. Although it may depend on the production facility, the preferred rotation speed for stirring is preferably from 30 to 300 rpm, more preferably from 40 to 200 rpm, still more preferably from 50 to 200 rpm. When the stirring rate in terms of rotation speed is 30 rpm or more, stirring efficiency of the diazonium compound liquid preparation is improved and therefore, progress of the desired reaction can be unfailingly achieved.

The solvent which can be mixed in the step (a) is not particularly limited as long as it does not bring about decomposition of the derived diazonium compound. Examples of the solvent which can be mixed include a hydrocarbon-based solvent such as hexane, benzene and toluene, an ether-based solvent such as diethyl ether and tetrahydrofuran, a ketone-based solvent such as acetone and methyl ethyl ketone, an amide-based solvent such as dimethylformamide, dimethylacetamide, pyrrolidone and N-methyl-2-pyrrolidone, dimethylsulfoxide, sulfolane, acetonitrile, and water.

The preferred pH of the diazonium compound liquid preparation in the step (a) is preferably 7 or less, more preferably 5 or less, still more preferably 3 or less. If the pH of the diazonium compound liquid preparation in the step (a) exceeds 7, decomposition of the derived diazonium compound is feared.

The amino compound used in the step (a) is preferably a compound represented by the following formula (4):

Formula (4):

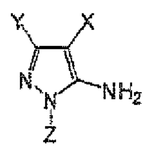

In formula (4), X represents an electron-withdrawing group having a Hammett's σp value of 0.2 or more, Y represents a hydrogen atom or a monovalent substituent, and Z represents a monovalent group.

The substituents of X, Y and Z have the same meanings as those of X, Y and Z in formula (1), and preferred examples are also the same.

The step (b) according to the present invention is described in detail below.

The step (b) is a step of performing a reaction by mixing the reaction product obtained in the step (a) with a coupling component to obtain a solution having dissolved therein at least a part of the azo compound represented by the following formula (1) produced by the reaction.

In the description of the present invention, the solution having dissolved therein at least a part of the azo compound is referred to as an "azo compound solution".

The method for preparing the azo compound solution includes:

(i) a method of performing a coupling reaction by mixing the reaction product obtained in the step (a) and a coupling component, where an azo pigment represented by formula (1) precipitated as a result of reaction is obtained in a state of being dissolved in a solvent, and

(ii) a method of performing the above-described coupling reaction so that at least a part of the compound represented by formula (1) obtained by the coupling reaction can be dissolved in the reaction solution, where the reaction solution is directly used as the azo compound solution, or a method where an azo pigment obtained (crystallized) by applying the azo compound solution obtained as above to a step (c) described in detail below is further dissolved in a solvent to obtain an azo compound solution.

In both of these modes (i) and (ii), the method for mixing the diazonium compound liquid preparation obtained in the step (a) and a coupling component is not particularly limited, but preferably, the coupling component is added in a state of being dissolved in a solvent, and it is more preferred to add a solution of the coupling component to the diazonium compound liquid preparation obtained in the step (a).

The amount of the diazonium compound in the diazonium compound liquid preparation obtained in the step (a), based on the coupling component in the step (b), is preferably from 0.8 to 3 equivalents with respect to the coupling position of the coupling component, more preferably from 0.9 to 2 equivalents with respect to the coupling position, still more preferably from 0.95 to 1.5 equivalents with respect to the coupling position. When the amount is 0.8 equivalents

or more, a coupling component having an unreacted coupling position can be prevented from remaining and when the amount is 3 equivalents or less, an unreacted diazonium compound can be prevented from remaining and this is more profitable.

Incidentally, according to the mode (ii), at least a part of the azo compound represented by formula (1) is dissolved in the step (b), so that the coupling reaction can more smoothly proceed and a higher-purity azo compound can be produced. This is effective particularly when n in formula (1) is 2 or more. The reason therefor is presumed as follows. When n is 2 or more, two or more coupling positions are present and the reaction passes through a reaction intermediate where, for example, only one coupling position is reacted. If the reaction intermediate above precipitates in the reaction system, the reaction rate for the coupling reaction at the second and subsequent coupling positions is decreased. On the other hand, the diazonium compound is unstable and its decomposition may occur after a long time passes. Accordingly, it is important to let the coupling reaction proceed rapidly. As a result, the production process in the mode (ii) allowing no production of a precipitate in the step (b) is more suitable to produce a high-purity pigment.

In the step (b), the coupling component may be added without using a solvent but is preferably mixed with a solvent and then added. In the case of using a solvent for the coupling component in the step (b), the solvent is not particularly limited but is preferably a solvent capable of resulting in the mode (ii), that is, giving a solution having dissolved therein at least a part of the azo compound represented by formula (1) produced after the reaction.

In the case of the mode (i), that is, in the case of precipitating a pigment, examples of the solvent which can be used include water, an organic acid, an inorganic acid and an organic solvent. Among these, an organic solvent is preferred, and a solvent causing no liquid separation phenomenon during reaction and providing a uniform solution with the solvent is preferred. Examples thereof include water, an alcoholic organic solvent such as methanol, ethanol, propanol, isopropanol, butanol, tert-butyl alcohol and amyl alcohol, a ketone-based organic solvent such as acetone and methyl ethyl ketone, a diol-based organic solvent such as ethylene glycol, diethylene glycol, triethylene glycol, propylene glycol, dipropylene glycol and 1,3-propanediol, an ether-based organic solvent such as ethylene glycol monomethyl ether, ethylene glycol monoethyl ether and ethylene glycol diethyl ether, tetrahydrofuran, dioxane and acetonitrile. A mixed solution of two or more kinds of these solvents may be also used.

An organic solvent having a polarity parameter (ET) value of 40 or more is preferred. Above all, a glycol-based solvent having two or more hydroxyl groups in the solvent molecule, an alcohol-based solvent having 3 or less carbon atoms, and a ketone-based solvent having a total carbon number of 5 or less are preferred, and an alcohol solvent having 2 or less carbon atoms (e.g., methanol, ethylene glycol) and a ketone-based solvent having a total carbon number of 4 or less (e.g., acetone, methyl ethyl ketone) are more preferred. A mixed solvent of these is also included in the organic solvent above.

In the case of the mode (ii), that is, in the case of performing a coupling reaction so that at least a part of the compound represented by formula (1) can be dissolved in the reaction solution, examples of the solvent include an alcohol-based solvent such as methanol, isopropanol and ethylene glycol, a ketone-based solvent such as acetone and methyl ethyl ketone, an organic acid solvent such as acetic acid, propionic acid and methanesulfonic acid, an inorganic acid solvent such as sulfuric acid, hydrochloric acid and phosphoric acid, an amide-based solvent such as dimethylformamide, dimethylacetamide, pyrrolidone and N-methyl-2-pyrrolidone, dimethylsulfoxide, sulfolane, and acetonitrile. Among these, a ketone-based solvent such as acetone and methyl ethyl ketone, an organic acid solvent such as acetic acid, propionic acid and methanesulfonic acid, and an inorganic acid solvent such as sulfuric acid, hydrochloric acid and phosphoric acid are preferred, an acidic solvent of organic acid or inorganic acid is more preferred, and acetic acid, methanesulfonic acid, phosphoric acid and sulfuric acid are most preferred. A mixed solvent of these solvents is also suitable.

In the case of the mode (ii), an acidic solution obtained by dissolving or suspending the coupling component in an acidic solvent and the reaction product obtained in the step (a) are preferably mixed in the step (b). Above all, the acidic solvent is preferably a solvent containing at least either one of acetic acid and sulfuric acid.

In both of the modes (i) and (ii), the preferred amount of the solvent added is preferably, in terms of mass ratio, from 0.5 to 200 times, more preferably from 1 to 100 times, still more preferably 1 to 50 times, based on the coupling component. As for the preferred amount added of the solvent based on the coupling component, if the mass ratio is 0.5 times or less, stirring of the coupling component and the solvent in a production machine becomes difficult and the desired reaction does not proceed, whereas if the mass ratio is 200 times or more, this is unprofitable.

In the case where the preparation method of the azo compound solution is the mode (i) or is the mode (ii) in which an azo pigment obtained by applying the coupling reaction solution having dissolved therein at least a part of the compound represented by formula (1) to the step (c) is further dissolved to prepare an azo compound solution, the solvent for dissolving the obtained azo pigment is not particularly limited as long as it can dissolve at least a part of the azo pigment, but examples thereof are the same as preferred examples of the solvent described in the mode (ii).

As for the azo compound solution obtained in the step (b), the ratio of the azo compound represented by formula (1) dissolved in the azo compound solution to the total amount of the azo compound produced in the step (b) (the sum of the azo compound represented by formula (1) dissolved in the azo compound solution and the azo pigment represented

by formula (1) precipitated from the azo compound solution) is preferably 50 mass% or more, more preferably 75 mass% or more, still more preferably 90 mass% or more, and most preferably 100 mass% (a state of the azo compound produced in the step (b) being completely dissolved in the reaction solution).

In the step (b), the mixing of the diazonium compound liquid preparation of the step (a) and the coupling component is preferably performed at a temperature of 50°C or less, more preferably 30°C or less, still more preferably 25°C or less. If the mixing temperature is 50°C or more, decomposition of the diazonium compound derived in the step (a) and the produced azo compound represented by formula (1) is feared. A normal stirrer is used for mixing, and there is no particular limitation thereon. Although it may depend on the production facility, the preferred rotation speed for stirring is preferably from 30 to 300 rpm, more preferably from 40 to 200 rpm, still more preferably from 50 to 200 rpm. If the stirring rate in terms of rotation speed is 30 rpm or less, stirring efficiency of the mixed solution is reduced and the desired reaction may not proceed. In the step (b), the stirring time is preferably from 0.1 to 10 hours, more preferably from 0.3 to 5 hours, still more preferably from 0.3 to 3 hours. If the stirring time is 0.1 hours or less, it is difficult for the pigment to be completely derived, and if the stirring time is 10 hours or more, decomposition of the diazonium compound represented by formula (1) is feared.

In the step (b), at the time of mixing the diazonium compound liquid preparation of the step (a) and the coupling component, two or more kinds of compounds may be used for the diazonium compound in the diazonium compound liquid preparation and/or for the coupling component. In this case, as for the obtained azo compound represented by formula (1), two or more kinds of compounds are produced at the same time.

The coupling component used in the step (b) is preferably a compound represented by the following formula (5) :

Formula (5):

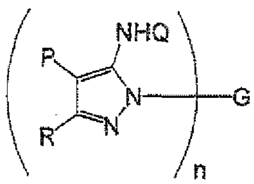

In formula (5), G represents a heterocyclic ring, n represents an integer of 1 to 4, each of R and Q independently represents a hydrogen atom or a substituent, and P represents a hydrogen atom or a leaving group.

The substituents of G, R and Q have the same meanings as the substituent of G in formula (1), and preferred examples are also the same.

P represents a hydrogen atom or a leaving group. The leaving group means a group capable of leaving by a chemical reaction and indicates, for example, a group capable of leaving by a coupling reaction with a diazonium compound, or a group capable of readily causing an addition-elimination reaction with an oxide of a phenylenediamine derivative. P is preferably, for example, a hydrogen atom, a halogen atom, an alkyloxy group, an aryloxy group, an alkylthio group or arylthio group more preferably a hydrogen atom or a halogen atom, and most preferably a hydrogen atom.

The step (c) according to the present invention is described in detail below.

The step (c) is a step of mixing the azo compound solution obtained in the step (b) with a poor solvent in which the azo compound has low solubility, to crystallize a pigment. The method for mixing the azo compound solution obtained in the step (b) with a poor solvent is not particularly limited, but it is preferred to add the azo compound solution obtained in the step (b) to a poor solvent and at this time, the poor solvent is preferably in a state of being stirred.

The stirring speed is preferably from 100 to 10,000 rpm, more preferably from 150 to 8,000 rpm, still more preferably from 200 to 6,000 rpm. For the addition, a pump or the like may be also used. At this time, either in-liquid addition or out-of-liquid addition may be employed, but in-liquid addition is preferred. Furthermore, continuous supply into liquid through a supply pipe by using a pump is preferred.

The poor solvent is not particularly limited, but the solubility of the azo compound is preferably 1 g/L or less, more preferably 0.1 g/L or less. This solubility may be a solubility when dissolved in the presence of an acid or an alkali. As for the compatibility or uniform mixing property between the azo compound solution obtained in the step (b) and the poor solvent, the amount of the good solvent dissolved in the poor solvent for the azo compound is preferably 30 wt% or more, more preferably 50 wt% or more. In the description of the present invention, the solubility indicates a solubility at 25°C.

Examples of the poor solvent include an aqueous solvent such as water, hydrochloric acid, aqueous ammonia and aqueous sodium hydroxide solution, an alcohol-based solvent such as methanol, ethanol, isopropyl alcohol and 1-methoxy-2-propanol, a ketone compound solvent such as acetone, methyl ethyl ketone, methyl isobutyl ketone and

cyclohexanone, an ether-based solvent such as diethyl ether and tetrahydrofuran, a hydrocarbon-based solvent such as hexane, benzene and toluene, a nitrile-based solvent such as acetonitrile, a halogen-based solvent such as dichloromethane and trichloroethylene, and an ester-based solvent such as ethyl acetate, ethyl lactate and 2-(1-methoxy)propyl acetate. The poor solvent is preferably an aqueous solvent such as water, hydrochloric acid, aqueous ammonia and aqueous sodium hydroxide solution, an alcohol-based solvent such as methanol, ethanol, isopropyl alcohol and 1-methoxy-2-propanol, or a ketone compound solvent such as acetone, methyl ethyl ketone, methyl isobutyl ketone and cyclohexanone, more preferably an aqueous solvent such as aqueous ammonia water, or an alcohol solvent having a carbon number of 1 to 3. A mixed solvent of these solvents is also suitable. The poor solvent is most preferably one or more solvents selected from the group consisting of water and an alcohol having a carbon number of 1 to 3.

The mixing ratio between the azo compound solution obtained in the step (b) and the poor solvent is, in terms of volume ratio, from 1/50 to 2/3, more preferably from 1/40 to 1/2, still more preferably from 1/20 to 1/2. When the volume ratio is 2/3 or less, sufficient crystallization of a pigment occurs and the reaction yield is increased, and when the volume ratio is 1/50 or more, productivity is enhanced and this is profitable.

The temperature when mixing the azo compound solution obtained in the step (b) with the poor solvent is not particularly limited, but the mixing is preferably performed at -10 to 50°C, more preferably at -5 to 30°C, and most preferably at -5 to 15°C.

At the mixing of the azo compound solution obtained in the step (b) with the poor solvent, when the Reynolds number is adjusted, the particle diameter of the organic nanoparticle produced by precipitation can be controlled. Here, the Reynolds number is a dimensionless number indicative of the flowing state of a fluid and is represented by the following formula:

Mathematical Formula (1):

$$Re = \rho UL/\mu$$

(wherein Re represents the Reynolds number, $\rho$ represents the density [kg/m$^3$] of the azo compound solution obtained in the step (b), U represents the relative velocity [m/s] when the azo compound solution meets the poor solvent, L represents the equivalent diameter [m] of the flow path in the portion of meeting between the azo compound solution and the poor solvent or the supply port, and $\mu$ represents the viscosity coefficient [Pa·s] of the azo compound solution).

Assuming a circular pipe equivalent in the opening diameter or flow path to piping having an arbitrary cross-sectional shape, the equivalent diameter L indicates the diameter of the equivalent circular pipe. The equivalent diameter L is represented by the following mathematical formula (2) where A is the cross-sectional area of piping and p is the wetted perimeter length (peripheral length) of piping or the outer circumference of flow path:

Mathematical Formula (2):

$$L = 4A/p$$

The relative velocity U at the time of the azo compound solution meeting the poor solvent is defined by the relative velocity in the direction perpendicular to the surface in the portion of meeting between those two members. That is, for example, when mixing is performed by pouring the azo compound solution in the poor solvent standing still, the speed of pouring from the supply port is equal to the relative velocity U. The value of the relative velocity U is not particularly limited but is preferably, for example, from 0.5 to 100 m/s, more preferably from 1.0 to 50 m/s.

The density $\rho$ of the azo compound solution is a value determined by the kind of the material selected but is practically, for example, from 0.8 to 2.0 kg/m$^3$. Also, the viscosity coefficient $\mu$ of the azo compound solution is a value determined by the material, ambient temperature and the like used but is preferably, for example, from 0.5 to 100 mPa·s, more preferably from 1.0 to 50.0 mPa·s.

As the value of Reynolds number is smaller, a laminar flow is liable to be formed, and as the value is larger, a turbulent flow is liable to be formed. For example, when the Reynolds number is adjusted to 60 or more, a pigment nanoparticle with a controlled particle diameter can be obtained, and the Reynolds number is preferably 100 or more, more preferably 150 or more. The Reynolds number has no particular upper limit, but when the value is adjusted in the range of 100,000 or less, a pigment particle controlled to have a desired average particle diameter can be obtained. At this time, within the range above, a pigment particle controlled to have a smaller particle diameter can be obtained usually by increasing the Reynolds number.

When the primary particle of the pigment particle obtained by the production process of the present invention is observed by a transmission microscope, the length in the long axis direction is preferably from 1 nm to 1 μm, more preferably from 5 to 500 nm, still more preferably from 10 to 200 nm, yet still more preferably from 10 to 100 nm.

With respect to the particle diameter of the pigment particle, there is a method of measuring, digitizing and expressing it in terms of an average size of a group, and the size often used includes, for example, a mode diameter indicating the maximum value of distribution, a median diameter corresponding to the median value in the integral distribution curve, and various average diameters (e.g., number average, length average, area average, mass average, volume average). In the present invention, unless otherwise indicated, the average particle diameter means a number average particle diameter.

Examples of the method for measuring the particle diameter of the pigment particle include a microscopic method, a weighting method, a light scattering method, a light shielding method, an electric resistance method, an acoustic method, and a dynamic light scattering method, with a microscopic method and a dynamic light scattering method being preferred. Examples of the microscope used in the microscopic method include a scanning electron microscope and a transmission electron microscope. Examples of the particle measuring apparatus employing a dynamic light scattering method include Nanotrac UPA-EX 150 manufactured by Nikkiso Co., Ltd., and Dynamic Light Scattering Photometer DLS-7000 Series manufactured by Otsuka Electronics Co., Ltd.

The above-described preferred average particle diameter of the pigment particle can be achieved by appropriately adjusting (1) the temperature in the step (c), (2) the solubility of the azo compound for the poor solvent, and (3) the stirring speed (or Reynolds number).

In preparing a liquid dispersion by precipitating organic fine particles, at least either one of the azo compound solution and the poor solvent may contain a dispersant. At this time, it is preferred to incorporate the dispersant into the azo compound solution. The dispersant has actions of (1) quickly adsorbing to the precipitated pigment surface to form fine nanoparticles and (2) preventing these particles from again aggregating.

As the dispersant, for example, an anionic, cationic, amphoteric or nonionic, low molecular or polymer dispersant may be used.

As for the polymer dispersant, its mass average molecular weight is preferably from 1,000 to 500,000, more preferably from 10,000 to 500,000, still more preferably from 10,000 to 100,000.

Specific examples thereof include polyvinylpyrrolidone, polyvinyl alcohol, polyvinyl methyl ether, polyethylene glycol, polypropylene glycol, polyacrylamide, a vinyl alcohol-vinyl acetate copolymer, partially formalized polyvinyl alcohol, partially butyralized polyvinyl alcohol, a vinylpyrrolidone-vinyl acetate copolymer, a polyethylene oxide/propylene oxide block copolymer, polyacrylate, polyvinyl sulfate, poly(4-vinylpyridine) salt, polyamide, polyallylamine salt, condensed naphthalenesulfonate, a cellulose derivative, and a starch derivative. In addition, natural polymers such as alginate, gelatin, albumen, casein, gum arabic, gum traganth, lignin sulfonate may be also used. Among these, polyvinylpyrrolidone is preferred. One of these polymer compounds may be used alone, or two or more thereof may be used in combination. Also, a low-molecular-weight dispersant may be combined. The dispersant used for dispersion of a pigment is described in detail in Ganryo Bunsan Anteika to Hyomen Shori Gijutsu•Hyoka (Dispersion Stabilization of Pigment and Surface Treatment Technique•Evaluation), pp. 29-46 (published by Japan Association for International Chemical Information, December 2001).

Examples of the anionic dispersant (anionic surfactant) include an N-acyl-N-alkyltaurine salt, a fatty acid salt, an alkylsulfonic ester salt, an alkylbenzenesulfonate, an alkylnaphthalenesulfonate, a dialkylsulfosuccinate, an alkylphosphonic ester salt, a naphthalenesulfonic acid-formalin condensate, and a polyoxyethylene alkylsulfonic ester salt. Among these, an N-acyl-N-alkyltaurine salt is preferred. As the N-acyl-N-alkyltaurine salt, those described in JP-A-3-273067 are preferred. One of these anionic dispersants may be used alone, or two or more thereof may be used in combination.

Examples of the cationic dispersant (cationic surfactant) include a quaternary ammonium salt, an alkoxylated polyamine, an aliphatic amine polyglycol ether, an aliphatic amine, a diamine or polyamine derived from an aliphatic amine and an aliphatic alcohol, an imidazoline derived from an aliphatic acid, and salts of these cationic substances. One of these cationic dispersants may be used alone, or two or more thereof may be used in combination.

The amphoteric dispersant is a dispersant having, in its molecule, both an anionic group moiety that is contained in the molecule of the anionic dispersant, and a cationic group moiety that is contained in the molecule of the cationic dispersant.

Examples of the nonionic dispersant (nonionic surfactant) include a polyoxyethylene alkyl ether, a polyoxyethylene alkylaryl ether, a polyoxyethylene fatty acid ester, a sorbitan fatty acid ester, a polyoxyethylene sorbitan fatty acid ester, a polyoxyethylene alkylamine, and a glycerin fatty acid ester. Among these, a polyoxyethylene alkylaryl ether is preferred. One of these nonionic dispersants may be used alone, or two or more thereof may be used in combination.

The content of the dispersant is preferably from 0.1 to 1,000 parts by mass, more preferably from 1 to 500 parts by mass, still more preferably from 5 to 200 parts by mass, per 100 parts by mass of the pigment. Also, one dispersant may be used alone, or a plurality of dispersants may be used in combination.

In the production process of an azo pigment of the present invention, the product obtained through the steps (a) to (c) is treated according to a post-treatment method in the normal organic synthesis reaction and then, with or without purification, can be used.

That is, for example, the product isolated from the reaction system can be used without purification or can be used after performing purification operations such as recrystallization and salt formation, individually or in combination.

Also, after the completion of reaction, the reaction solvent may or may not be removed by distillation, and the reaction solution may or may not be neutralized by pouring it in water or ice. The resulting product isolated or extracted with an organic solvent/aqueous solution may be used without purification or after performing purification operations such as recrystallization, crystallisation and salt formation, individually or in combination.

The azo pigment represented by formula (1) produced by the process of the present invention may be post-treated, if desired. Examples of the method for this post-treatment include a process of controlling the pigment particle by a milling treatment such as solvent salt milling, salt milling, dry milling, solvent milling and acid pasting or by a solvent heating treatment, and a process of treating the surface with a resin, a surfactant, a dispersant or the like.

The usage of the azo pigment of the present invention includes an image recording material for forming an image, particularly, a color image, and specific examples thereof include an inkjet recording material described later in detail, a heat-sensitive recording material, a pressure-sensitive recording material, a recording material using an electrophotographic system, a transfer silver halide light-sensitive material, a printing ink, and a recording pen. Among these, an inkjet recording material, a heat-sensitive recording material and a recording material using an electrophotographic system are preferred, and an inkjet recording material is more preferred.

Furthermore, the azo pigment is also applicable to a color filter for recording and reproducing a color image, which is used in a solid-state imaging device such as CCD or in a display such as LCD or PDP, or to a dyeing solution for dyeing various fibers.

According to the production process of the present invention described in the foregoing pages, as indicated above, at least a part of the azo compound represented by formula (1) is dissolved in the reaction solution in the step (b), so that when the preparation method of the azo compound solution is the mode (ii), the coupling reaction can more smoothly proceed and a higher-purity azo compound can be produced. This contributes to highly efficient production of the finally obtained azo pigment.

In the meanwhile, as described above, the pigment of Patent Document 1 precipitated in the reaction solution after coupling reaction (the pigment once obtained as a particle) can be hardly dissolved in an organic solvent. That is, in the case of dissolving the pigment of Patent Document 1 in an organic solvent with an attempt to more reduce the particle diameter of the pigment, a large amount of an organic solvent must be used, leading to a rise in the production cost, and moreover, even when an organic solvent is used in a large amount, the pigment is not dissolved in many cases. Of course, it is very difficult to completely dissolve the pigment.

On the other hand, according to the present invention, after the completion of step (b), a solution having dissolved therein at least a part of the target azo compound can be obtained without using a large amount of an organic solvent (obtained in a high concentration), and this contributes to highly efficient production of the finally obtained azo pigment. Furthermore, the azo compound solution obtained in the step (b) is mixed with a poor solvent for the azo compound, whereby an azo compound can be precipitated as a fine particle.

In this way, according to the production process of an azo pigment of the present invention, an azo pigment fine particle can be produced with high efficiency at a low cost.

[Coloring Composition]

The coloring composition of the present invention contains at least one of the azo pigment of the present invention and its salt, hydrate or solvate. The coloring composition of the present invention may contain a medium and when a solvent is used as the medium, the coloring composition is suitable particularly as an ink for inkjet recording. The coloring composition of the present invention can be produced by using a lipophilic medium or an aqueous medium and dispersing the pigment of the present invention in the medium. Use of an aqueous medium is preferred. The coloring composition of the present invention includes an ink composition after removing the medium. The coloring composition of the present invention may contain, if desired, other additives as long as the effects of the present invention are not impaired. Examples of other additives include known additives such as drying inhibitor (wetting agent), discoloration inhibitor, emulsion stabiliser, penetration accelerator, ultraviolet absorber, antiseptic, fungicide, pH adjusting agent, surface tension adjusting agent, defoaming agent, viscosity adjusting agent, dispersant, dispersion stabilizer, rust inhibitor and chelating agent (described in JP-A-2003-306623). These various additives are added, in the case of an aqueous ink, directly to the ink solution and, in the case of an oil-based ink, generally added to the dispersion after the preparation of an azo pigment dispersion but may be added to an oil phase or an aqueous phase at the preparation.

In the present invention, the volume average particle diameter (secondary particle diameter) of the pigment particle in the coloring composition is preferably from 0.01 to 0.15 $\mu$m.

The volume average particle diameter of the pigment particle in the pigment dispersion is preferably 0.01 μm or more, because the dispersion is enhanced in the stability with aging and hardly causes aggregation. Also, the volume average particle diameter of the particle is preferably 0.15 μm or less, because the optical density is high to give a printed matter having thick density and good color reproducibility in a mixed color part of red, green and the like as well as high transparency, and when printing is performed, for example, by an inkjet system, clogging of a nozzle scarcely occurs.

The volume average particle diameter of the pigment particle indicates the particle diameter of the pigment itself or when an additive such as dispersant is adhering to a color material, indicates the particle diameter of a particle to which the additive is attached. In the present invention, a Nanotrac UPA particle size distribution analyzer (Nanotrac UPA-EX150 manufactured by Nikkiso Co., Ltd.) can be used as the apparatus for measuring the volume average particle diameter of the pigment particle. The measurement is performed by charging 3 ml of a pigment dispersion in a measuring cell and following the predetermined measuring method. As for the parameters input at the measurement, the viscosity of the ink is used as the viscosity, and the density of the pigment is used as the density of dispersed particles.

## EXAMPLES

The present invention is described in greater detail below by referring to Examples, but the present invention is not limited to these Examples. In Examples, "parts" indicates parts by weight.

[Example 1]

Production of (Pig-5):

A mixed solution of 17.6 parts of acetic acid and 7.2 parts of sulfuric acid was ice-cooled to cool the inner temperature to 15°C and at the same temperature, 4 parts of the compound represented by the following formula (6) was added as a powder in portions. At the same temperature, 8.39 parts of nitrosylsulfuric acid was added to let the inner temperature rise to 25°C or less, and after stirring at an inner temperature of 20°C for 5 minutes, the ice bath was removed. The temperature was raised to an inner temperature of 27°C and after stirring at the same temperature for 1.5 hours, 0.8 parts of urea was added in portions at the same temperature. After stirring at the same temperature for 15 minutes, the reaction solution was cooled to an inner temperature of 0°C to obtain a diazonium compound liquid preparation (step (a)).

Separately, 39.2 parts of sulfuric acid was stirred at room temperature, and at the same temperature, 4.4 parts of the compound represented by the following formula (7) was added as a powder in portions to let the inner temperature rise to 55°C or less and completely dissolved. Thereafter, the inner temperature was cooled to 5°C by ice cooling, and the solution was added in portions to the diazonium compound solution obtained above to let the inner temperature cool to 3°C or less. After the completion of addition, the mixed solution was stirred at an inner temperature of 0°C for 1.5 hours to obtain a red, uniform azo compound solution (that is, this solution was in a state of the obtained azo compound being completely dissolved) (step (b)).

1,000 Parts of water having an inner temperature kept at 15°C was prepared as the poor solvent, and the azo compound solution above was added to the poor solvent with stirring to let the inner temperature rise to 25°C or less (step (c)).

After stirring at an inner temperature of 15°C for 10 minutes, the precipitated crystal was separated by filtration and spray-washed with 100 parts of water. The obtained crystal was suspended in 320 parts of water, and an aqueous 8 N potassium hydroxide solution was added to neutralize the excess acid. After stirring at room temperature for 20 minutes, the obtained crystal was separated by filtration, thoroughly spray-washed with water and then dried at room temperature for 2 days to obtain 8.2 parts (yield: 97.3%) of (Pig-5). The obtained pigment powder was observed with an eye through a transmission microscope (Electron Microscope JEM-1010, manufactured by JEOL Ltd.), as a result, the length in the long axis direction of the primary particle was 150 nm. Fig. 1 shows the IR spectrum of Pig-5.

Formula (6):

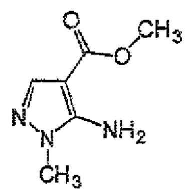

Formula (7)

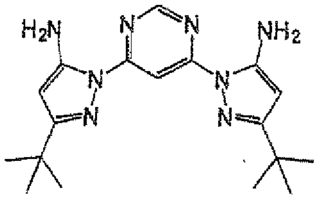

[Comparative Example 1]

9.2 Parts of the compound represented by formula (6) was added to a mixed solvent consisting of 57.8 parts of acetic acid and 37.0 parts of propionic acid and dissolved. This solution was ice-cooled to -3°C, and 23.2 parts of 43% nitrosylsulfuric acid solution was added over 10 minutes. During the addition, the temperature of the system climbed to 4°C. After the addition of nitrosylsulfuric acid, a diazotization reaction was performed at 4°C. After stirring for 1 hour, the excess nitrosylsulfuric acid was deactivated with urea, and the solution was cooled to -3°C to obtain a diazonium compound liquid preparation.

A solution obtained by adding and completely dissolving 10.0 parts of the compound represented by formula (7) in 118.7 parts of methanol was prepared, and to this solution, the diazonium compound liquid preparation above was added at 3°C or less. In the course of adding the diazonium compound liquid preparation, a yellow powder of (Pig-5) was precipitated. After the completion of addition of the diazonium compound liquid preparation, the reaction was allowed to proceed at 20°C for 1 hour, and the precipitated powder was separated by filtration. The obtained crystal was suspended in 400 parts of water, and an aqueous 8 N potassium hydroxide solution was added to neutralize the excess acid. After stirring at room temperature for 20 minutes, the obtained crystal was separated by filtration, thoroughly spray-washed with water and then dried at room temperature for 2 days to obtain 18.8 parts (yield: 97.1%) of (Pig-5). The obtained pigment powder was observed with an eye through a transmission microscope (Electron Microscope JEM-1010, manufactured by JEOL Ltd.), as a result, the length in the long axis direction of the primary particle was 20 μm or more.

[Example 2]

Production of (Pig-9):

4.1 Parts of the compound represented by formula (6) was added to a mixed solvent consisting of 17.1 parts of acetic acid, 3.0 parts of propionic acid and 1.0 parts of water and dissolved. This solution was ice-cooled to 5°C, and 8.5 parts of 43% nitrosylsulfuric acid solution was added. During the addition, the temperature of the system climbed to 25°C. After the addition of nitrosylsulfuric acid, a diazotization reaction was performed at 25°C. After stirring for 1.5 hours, the reaction solution was cooled to 15°C, and the excess nitrosylsulfuric acid was deactivated with urea to obtain a diazonium compound liquid preparation (step (a)).

A solution obtained by adding and completely dissolving 5.0 parts of the compound represented by the following formula (8) in 42.0 parts of acetic acid was prepared, and this solution was added to the diazonium compound liquid preparation above at 20°C or less. After the completion of addition, the reaction was allowed to proceed at 20°C for 1 hour to obtain an azo compound solution. During the reaction, precipitation of the pigment was not observed (that is, this solution was in a state of the obtained azo compound being completely dissolved) (step (b)).

A poor solvent consisting of 150 parts of methanol and 21 parts of water was prepared and stirred at 15°C. In this poor solvent, the azo compound solution above was poured at a flow velocity of 100 mL/min from liquid feed piping having a flow path diameter of 0.8 mm by using Large-Capacity Non-Pulsatile Pump Model NP-KX-500 (trade name, manufactured by Nihon Seimitsu Kagaku Co., Ltd.) (step (c)).

After stirring as-is for 5 minutes, 224 parts of water was added and the produced powder was separated by filtration. The powder was added to 175 parts of water, and the excess acid was neutralized with aqueous ammonia. Filtration and water washing were again performed to obtain 8.5 parts (yield: 91.3%) of (Pig-9). The obtained pigment powder was observed with an eye through a transmission microscope (Electron Microscope JEM-1010, manufactured by JEOL Ltd.), as a result, the length in the long axis direction of the primary particle was 50 nm. Fig. 2 shows the IR spectrum of Pig-9.

Formula (8):

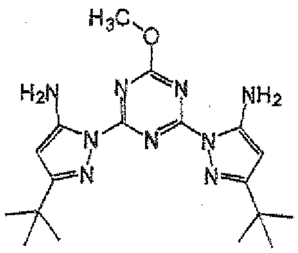

[Example 3]

8.2 Parts (yield: 88.1%) of (Pig-9) was obtained in the same manner as in Example 2 except that in Example 2, the poor solvent was changed to 275 parts of acetone. The obtained pigment powder was observed with an eye through a transmission microscope (Electron Microscope JEM-1010, manufactured by JEOL Ltd.), as a result, the length in the long axis direction of the primary particle was 300 nm. Incidentally, during the coupling reaction, precipitation of the pigment was not observed, and the azo compound solution was in a state of the obtained azo compound being completely dissolved.

[Comparative Example 2]

10.4 Parts of 43% nitrosylsulfuric acid solution was added to a mixed solvent consisting of 56.0 parts of acetic acid and 21.6 parts of sulfuric acid over 10 minutes. The resulting solution was cooled to 10°C, and 5.0 parts of the compound represented by formula (6) was added as a powder to perform a diazotization reaction. After stirring for 1 hour, the excess nitrosylsulfuric acid was deactivated with urea, and a diazonium compound liquid preparation was obtained in this way.

A solution obtained by adding and completely dissolving 6.0 parts of the compound represented by formula (8) in 162 parts of methanol was prepared, and to this solution, the diazonium compound liquid preparation above was added at 10°C. Immediately after addition of the diazonium compound liquid preparation, precipitation of a yellow powder of (Pig-9) started. After the completion of addition of the diazonium compound liquid preparation, the reaction was allowed to proceed at 20°C for 1 hour and then, 420 parts of water was poured therein. The precipitated powder was separated by filtration, and the obtained crystal was suspended in 400 parts of water. The excess acid was neutralized with aqueous ammonia and after stirring at room temperature for 20 minutes, the obtained crystal was separated by filtration, thoroughly spray-washed with water and then dried at room temperature for 2 days to obtain 10.0 parts (yield: 89.5%) of (Pig-9) . The obtained pigment powder was observed with an eye through a transmission microscope (Electron Microscope JEM-1010, manufactured by JEOL Ltd.), as a result, the length in the long axis direction of the primary particle was 3 μm.

[Example 4]

5.0 Parts of (Pig-9) synthesized according to Example 2 was added to 70.0 parts of a solvent having the same composition as the azo compound solution in the step (b) of Example 2 and stirred at 20°C. Even by stirring for 1 hour, (Pig-9) was not completely dissolved but partially remained undissolved. At this time, a 92 mass% portion of (Pig-9) was dissolved in the solvent. This suspension was added to the poor solvent by the same method as in the step (c) of Example 2 and subsequently, the produced powder was treated in the same manner to obtain 4.8 parts (yield: 96.0%) of (Pig-9) . The obtained pigment powder was observed with an eye through a transmission microscope (Electron Microscope JEM-1010, manufactured by JEOL Ltd.), as a result, the length in the long axis direction of the primary particle was 600 nm.

[Example 5]

5.0 Parts of (Pig-9) synthesized according to Example 2 was added to 70.0 parts of N-methylpyrrolidone and stirred at 20°C. Even by stirring for 1 hour, (Pig-9) was not completely dissolved but partially remained undissolved. At this time, a 67 mass% portion of (Pig-9) was dissolved in the solvent. This suspension was added to the poor solvent by the same method as in the step (c) of Example 2 and subsequently, the produced powder was treated in the same manner to obtain 4.8 parts (yield: 96.0%) of (Pig-9). The obtained pigment powder was observed with an eye through a transmission microscope (Electron Microscope JEM-1010, manufactured by JEOL Ltd.), as a result, the length in the long axis direction of the primary particle was 400 nm.

[Example 6]

Production of (Pig-8):

6.8 Parts of the compound represented by formula (6) was added to a mixed solvent consisting of 28.7 parts of acetic acid, 5.1 parts of propionic acid and 1.8 parts of water and dissolved. This solution was ice-cooled to 5°C, and 13.1 parts of 43% nitrosylsulfuric acid solution was added. During the addition, the temperature of the system climbed to 25°C. After the addition of nitrosylsulfuric acid, a diazotization reaction was performed at 25°C. After stirring for 1.5 hours, the reaction solution was cooled to 15°C, and the excess nitrosylsulfuric acid was deactivated with urea to obtain a diazonium compound liquid preparation (step (a)).

A solution obtained by adding and completely dissolving 7.4 parts of the compound represented by the following formula (9) in a mixed solution of 64.9 parts of acetic acid and 37.1 parts of sulfuric acid was prepared, and this solution was added to the diazonium compound liquid preparation above at 20°C or less. After the completion of addition, the reaction was allowed to proceed at 20°C for 1 hour to obtain an azo compound solution. During the reaction, precipitation of the pigment was not observed (that is, this solution was in a state of the obtained azo compound being completely dissolved) (step (b)).

A poor solvent consisting of 210 parts of methanol and 30 parts of water was prepared and stirred at 15°C and 250 rpm. In this poor solvent, the azo compound solution above was added dropwise (step (c)).

After stirring as-is for 5 minutes, 292 parts of water was added and the produced powder was separated by filtration. The powder was added to 270 parts of water, and the excess acid was neutralized with aqueous ammonia. Filtration and water washing were again performed to obtain 12.5 parts (yield: 89.0%) of (Pig-8). The obtained pigment powder was observed with an eye through a transmission microscope (Electron Microscope JEM-1010, manufactured by JEOL Ltd.), as a result, the length in the long axis direction of the primary particle was 130 nm. Fig. 3 shows the IR spectrum of Pig-8.

Formula (9):

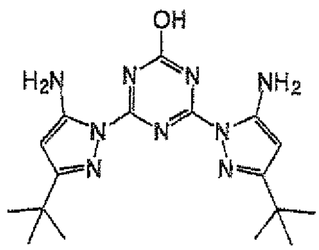

[Example 7]

Production of (Pig-10):

1.7 Parts of the compound represented by formula (6) was added to a mixed solvent consisting of 7.1 parts of acetic acid and 1.4 parts of propionic acid and dissolved. This solution was ice-cooled to 5°C, and 3.6 parts of 43% nitrosylsulfuric acid solution was added. During the addition, the temperature of the system climbed to 25°C. After the addition of nitrosylsulfuric acid, a diazotization reaction was performed at 25°C. After stirring for 1.5 hours, the reaction solution was cooled to 15°C, and the excess nitrosylsulfuric acid was deactivated with urea to obtain a diazonium compound liquid preparation (step (a)).

A solution obtained by adding and completely dissolving 2.0 parts of the compound represented by the following formula (10) in 16.0 parts of acetic acid was prepared, and this solution was added to the diazonium compound liquid preparation above at 20°C or less. After the completion of addition, the reaction was allowed to proceed at 20°C for 30 minutes to obtain an azo compound solution. During the reaction, precipitation of the pigment was not observed (that is, this solution was in a state of the obtained azo compound being completely dissolved) (step (b)).

150 Parts of methanol as the poor solvent was poured in the azo compound solution at a flow velocity of 100 mL/min from liquid feed piping having a flow path diameter of 0.8 mm by using Large-Capacity Non-Pulsatile Pump Model NP-KX-500 (trade name, manufactured by Nihon Seimitsu Kagaku Co., Ltd.) (step (c)).

After stirring as-is for 5 minutes, the produced powder was separated by filtration, and the powder was added to 100 parts of water. The excess acid was neutralized with sodium hydrogencarbonate, and filtration and water washing were again performed to obtain 3.4 parts (yield: 89.5%) of (Pig-10). The obtained pigment powder was observed with

an eye through a transmission microscope (Electron Microscope JEM-1010, manufactured by JEOL Ltd.), as a result, the length in the long axis direction of the primary particle was 100 nm. Fig. 4 shows the IR spectrum of Pig-10.

Formula (10):

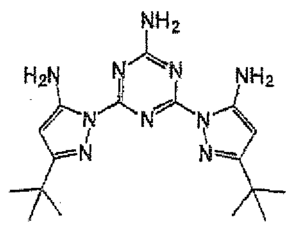

[Example 8]

Production of (Pig-11):

8.4 Parts (yield: 87.4%) of (Pig-11) was obtained in the same manner as in Example 2 except that the compound represented by formula (6) was changed to the compound represented by the following formula (11). The obtained pigment powder was observed with an eye through a transmission microscope (Electron Microscope JEM-1010, manufactured by JEOL Ltd.), as a result, the length in the long axis direction of the primary particle was 160 nm. Incidentally, during the coupling reaction, precipitation of the pigment was not observed, and the azo compound solution was in a state of the obtained azo compound being completely dissolved. Fig. 5 shows the IR spectrum of Pig-11.

Formula (11):

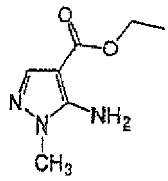

[Reference Example 9]

Production of (Pig-14):

2.9 Parts of the compound represented by the following formula (12) was added to a mixed solvent consisting of 33.2 parts of acetic acid, 1.7 parts of propionic acid and 0.6 parts of water and dissolved. This solution was ice-cooled to 15°C, and 5.6 parts of 43% nitrosylsulfuric acid solution was added. During the addition, the temperature of the system climbed to 25°C. After the addition of nitrosylsulfuric acid, a diazotization reaction was performed at 25°C. After stirring for 1.5 hours, the reaction solution was cooled to 15°C, and the excess nitrosylsulfuric acid was deactivated with urea to obtain a diazonium compound liquid preparation (step (a)).

A solution obtained by adding 3.0 parts of the compound represented by formula (8) in 100 parts of methanol was prepared, and the diazonium compound liquid preparation above was added thereto at 20°C or less. After the completion of addition, the reaction was allowed to proceed at 20°C for 1 hour to obtain an azo compound solution. During the reaction, precipitation of the pigment was not observed (that is, this solution was in a state of the obtained azo compound being completely dissolved) (step (b)).

A poor solvent consisting of 100 parts of water was prepared and stirred at 5°C, and in this poor solvent, the azo compound solution above was poured at a flow velocity of 100 mL/min from liquid feed piping having a flow path diameter of 0.8 mm by using Large-Capacity Non-Pulsatile Pump Model NP-KX-500 (trade name, manufactured by Nihon Seimitsu Kagaku Co., Ltd.) (step (c)).

After stirring as-is for 5 minutes, the produced powder was separated by filtration, and the powder was added to 175 parts of water. The excess acid was neutralized with aqueous ammonia, and filtration and water washing were again performed to obtain 5.2 parts (yield: 90.3%) of (Pig-14). The obtained pigment powder was observed with an eye through a transmission microscope (Electron Microscope JEM-1010, manufactured by JEOL Ltd.), as a result, the length in the long axis direction of the primary particle was 400 nm. Fig. 6 shows the IR spectrum of Pig-14.

Formula (12):

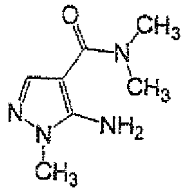

[Example 10]

Production of (Pig-16):

7.6 Parts (yield: 78.3%) of (Pig-16) was obtained in the same manner as in Example 2 except that the compound represented by formula (6) was changed to the compound represented by the following formula (13). The obtained pigment powder was observed with an eye through a transmission microscope (Electron Microscope JEM-1010, manufactured by JEOL Ltd.), as a result, the length in the long axis direction of the primary particle was 200 nm. Incidentally, during the coupling reaction, precipitation of the pigment was not observed, and the azo compound solution was in a state of the obtained azo compound being completely dissolved. Fig. 7 shows the IR spectrum of Pig-16.

Formula (13):

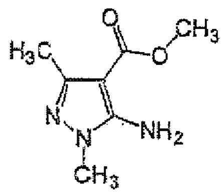

[Reference Example 11]

Production of (Pig-17):

5.6 Parts of 43% nitrosylsulfuric acid solution was added to a mixed solvent consisting of 37.2 parts of acetic acid and 14.3 parts of sulfuric acid over 10 minutes. The resulting solution was cooled to 3°C, and 3.7 parts of the compound represented by the following formula (14) was added as a powder to perform a diazotization reaction. After stirring at the same temperature for 1 hour, the excess nitrosylsulfuric acid was deactivated with urea, and a diazonium compound liquid preparation was obtained in this way.
To this diazonium compound liquid solution, 3.0 parts of the compound represented by formula (8) was added as a powder in portions at 5°C or less. After the completion of addition, the reaction was allowed to proceed for 2 hours by raising the temperature to 20°C, whereby an azo compound solution was obtained. Incidentally, during the coupling reaction, precipitation of the pigment was not observed, and the azo compound solution was in a state of the obtained azo compound being completely dissolved.
A poor solvent consisting of 130 parts of methanol was prepared and stirred at 5°C and 200 rpm, and to this poor solvent, the azo compound solution above was added dropwise.
After stirring as-is for 15 minutes, the produced powder was separated by filtration, and the powder was added to 175 parts of water. The excess acid was neutralized with aqueous ammonia, and filtration and water washing were again performed to obtain 5.7 parts (yield: 86.7%) of (Pig-17). The obtained pigment powder was observed with an eye through a transmission microscope (Electron Microscope JEM-1010, manufactured by JEOL Ltd.), as a result, the length in the long axis direction of the primary particle was 250 nm. Fig. 8 shows the IR spectrum of Pig-17.

Formula (14):

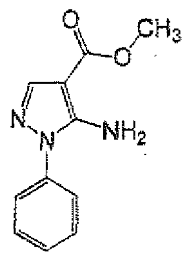

[Reference Example 12]

Production of (Pig-18):

5.6 Parts (yield: 83.3%) of (Pig-18) was obtained in the same manner as in Example 11 except that the compound represented by formula (8) was changed to the compound represented by the following formula (15). The obtained pigment powder was observed with an eye through a transmission microscope (Electron Microscope JEM-1010, manufactured by JEOL Ltd.), as a result, the length in the long axis direction of the primary particle was 400 nm. Incidentally, during the coupling reaction, precipitation of the pigment was not observed, and the azo compound solution was in a state of the obtained azo compound being completely dissolved. Fig. 9 shows the IR spectrum of Pig-18.

Formula (15):

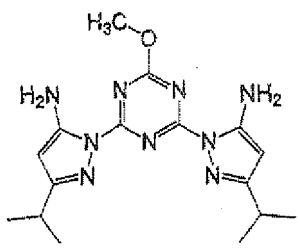

As verified above, according to the production process of Examples, a pigment fine particle having a small particle diameter could be obtained with high efficiency.

[Example 13]

2.5 Parts of Pigment (Pig-9) synthesized in Example 2, 0.5 parts of sodium oleate, 5 parts of glycerin and 42 parts of water were mixed, and the mixture was dispersed together with 100 parts of zirconium beads having a diameter of 0.1 mm by using a planetary ball mill at 300 rpm for 2 hours. After the completion of dispersion, zirconia beads were separated to obtain a yellow, aqueous pigment dispersion.

Respective components were added to concentrations of, in terms of solid content, 5 mass% of the aqueous pigment dispersion above, 10 mass% of glycerin, 5 mass% of pyrrolidone, 2 mass% of 1,2-hexauediol, 2 mass% of triethylene glycol butyl ether, 0.5 mass% of propylene glycol, and 75.5 mass% of ion-exchanged water, and the resulting mixed solution was filtered by using a 20 ml-volume syringe equipped with a filter of 1 μm (acetyl cellulose membrane, outer diameter: 25 mm, manufactured by Fujifilm Corp.) to remove coarse particles, whereby a pigment ink solution was obtained.

This pigment ink solution was charged into a cartridge for yellow ink solution of Inkjet Printer PX-V630 manufactured by Seiko Epson Corporation, and a yellow monochromatic image pattern stepwise changed in the density and green, red and gray image patterns were printed in the recommended mode "kirei (fine)" on image-receiving sheets, Photo Paper <Kotaku> produced by Seiko Epson Corporation and Photo Paper Crispia <Ko-Kotaku> produced by Seiko Epson Corporation, by using the pigment ink solutions of PX-V630 for inks of other colors, as a result, the ejection property of ink was good.

INDUSTRIAL APPLICABILITY

According to the present invention, a production process of an azo pigment, where an azo pigment fine particle

can be produced with high efficiency (purity and productivity) at a low cost, an azo pigment using the production process, and a coloring composition can be provided.

The invention has been described in detail with reference to specific embodiments thereof.

This application is based on Japanese Patent Application (Patent Application No. 2009-0205357) filed on September 4, 2009 and Japanese Patent Application (Patent Application No. 2010-196934) filed on September 2, 2000.

## Claims

1. A process for producing an azo pigment or a salt, hydrate or solvate thereof, comprising:

   (a) a step of reacting a diazotizing agent with an amino compound to produce a diazonium compound,
   (b) a step of performing a coupling reaction between the diazonium compound obtained in step (a) and a coupling component to obtain a mixture in which at least a part of an azo compound represented by the following formula (1) produced by the coupling reaction is dissolved, and
   (c) a step of mixing the mixture obtained in step (b) with a poor solvent for the azo compound so as to crystallize an azo pigment of formula (1):

   Formula (1):

   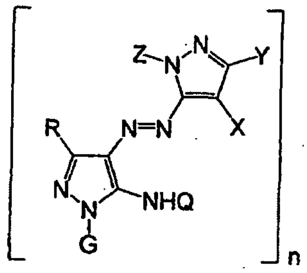

   wherein G represents a heterocyclic group; each of R, X, Y, Z and Q independently represents a hydrogen atom or a substituent; n represents an integer of 1 to 4; and the formula represents a dimer through R, X, Y, Z, Q or G when n=2, represents a trimer through R, X, Y, Z, Q or G when n=3, and represents a tetramer through R, X, Y, Z, Q or G when n=4;
   wherein, in step (b), the diazonium compound obtained in step (a) is mixed with an acidic solution containing the coupling component dissolved in an acidic solvent, the acidic solvent comprising at least one of acetic acid and sulfuric acid.

2. A process according to Claim 1, wherein in step (b), a solution in which the azo compound represented by formula (1) is completely dissolved is obtained.

3. A process according to Claim 1 or Claim 2, wherein the azo compound obtained in step (b) has a solubility of 1 g/L or less in said poor solvent.

4. A process according to any preceding claim, wherein the poor solvent comprises one or more of water and an alcohol having a carbon number of 1 to 3.

5. A process according to any preceding claim, wherein the azo pigment represented by formula (1) is an azo pigment represented by the following formula (2):

   Formula (2):

   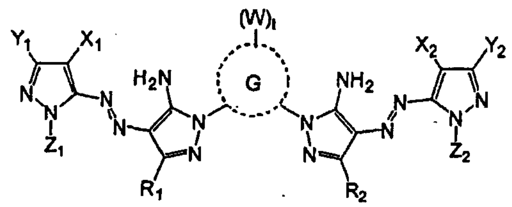

wherein each of $R_1$ and $R_2$ independently represents a hydrogen atom or a substituent; each of $X_1$ and $X_2$ independently represents an electron-withdrawing group having a Hammett's σp value of 0.2 or more; each of $Y_1$ and $Y_2$ independently represents a hydrogen atom or a monovalent substituent; each of $Z_1$ and $Z_2$ independently represents a monovalent substituent; G represents a 5- or 6-membered heterocyclic group; W represents a substituent capable of bonding to the heterocyclic group constituted by G; and t represents an integer of 0 to 3.

**6.** A process according to any preceding claim, wherein, in formula (1) or formula (2), G is a 6-membered nitrogen-containing heterocyclic group.

**7.** A process according to any preceding claim, wherein, in formula (1) or formula (2), G represents one of the following formulae (3-1), (3-2) and (3-3):

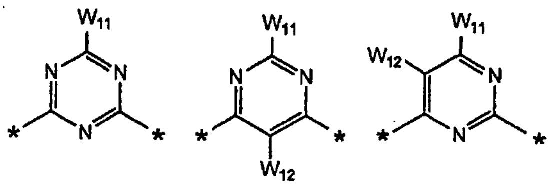

(3-1) (3-2) (3-3)

wherein each of $W_{11}$ and $W_{12}$ independently represents a hydrogen atom or a substituent capable of bonding to the heterocyclic ring.

**8.** A process according to any preceding claim, wherein X in formula (1) or $X_1$ and $X_2$ in formula (2) is/are one selected from an alkyloxycarbonyl group having a carbon number of 2 to 12, a carbamoyl group having a carbon number of 1 to 12, and an acyl group having a carbon number of 2 to 12.

## Patentansprüche

**1.** Verfahren zur Herstellung eines Azopigments oder eines Salzes, Hydrats oder Solvats hiervon, umfassend:

(a) einen Schritt zum Umsetzen eines Diazotierungsmittels mit einer Aminoverbindung, um eine Diazoniumverbindung herzustellen,
(b) einen Schritt zum Durchführen einer Kupplungsreaktion zwischen der in dem Schritt (a) erhaltenen Diazoniumverbindung und einer Kupplungskomponente, um eine Mischung zu erhalten, worin zumindest ein Teil einer durch die folgende Formel (1) dargestellten Azoverbindung, hergestellt durch die Kupplungsreaktion, gelöst ist, und
(c) einen Schritt zum Mischen der in Schritt (b) erhaltenen Mischung mit einem schlechten Lösungsmittel für die Azoverbindung, um so ein Azopigment der Formel (1) zu kristallisieren:

Formel (1):

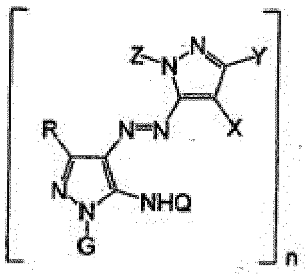

worin G eine heterocyclische Gruppe darstellt; jedes von R, X, Y, Z und Q unabhängig ein Wasserstoffatom oder einen Substituenten darstellt; n eine ganze Zahl von 1 bis 4 darstellt; und die Formel ein Dimer über R, X, Y, Z, Q oder G darstellt, wenn n=2 ist, sie ein Trimer über R, X, Y, Z, Q oder G darstellt, wenn n=3 ist, und ein Tetramer über R, X, Y, Z, Q oder G darstellt, wenn n=4 ist;
worin im Schritt (b) die im Schritt (a) erhaltene Diazoniumverbindung mit einer sauren Lösung gemischt wird,

die die Kupplungskomponente gelöst in einem sauren Lösungsmittel enthält, wobei das saure Lösungsmittel zumindest eines von Essigsäure und Schwefelsäure umfasst.

2. Verfahren gemäß Anspruch 1, worin im Schritt (b) eine Lösung erhalten wird, worin die durch die Formel (1) dargestellte Azoverbindung vollständig gelöst ist.

3. Verfahren gemäß Anspruch 1 oder Anspruch 2, worin die im Schritt (b) erhaltene Azoverbindung eine Löslichkeit von 1 g/l oder weniger in dem schlechten Lösungsmittel aufweist.

4. Verfahren gemäß irgendeinem vorstehenden Anspruch, worin das schlechte Lösungsmittel eines oder mehrere von Wasser und einem Alkohol mit einer Kohlenstoffanzahl von 1 bis 3 umfasst.

5. Verfahren gemäß irgendeinem vorstehenden Anspruch, worin das durch die Formel (1) dargestellte Azopigment ein durch die folgende Formel (2) dargestelltes Azopigment ist:

Formel (2):

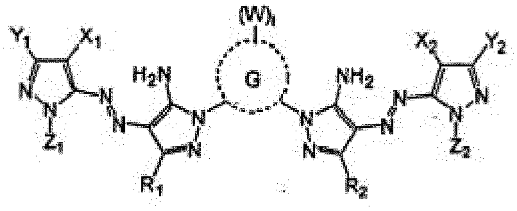

worin jedes von $R_1$ und $R_2$ unabhängig ein Wasserstoffatom oder einen Substituenten darstellt; jedes von $X_1$ und $X_2$ unabhängig eine elektronenziehende Gruppe mit einem Hammett-σp-Wert von 0,2 oder größer darstellt; jedes von $Y_1$ und $Y_2$ unabhängig ein Wasserstoffatom oder einen monovalenten Substituenten darstellt; jedes von $Z_1$ und $Z_2$ unabhängig einen monovalenten Substituenten darstellt; G eine 5- oder 6-gliedrige heterocyclische Gruppe darstellt; W einen Substituenten darstellt, der in der Lage ist, an die durch G aufgebaute heterocyclische Gruppe zu binden; und t eine ganze Zahl von 0 bis 3 darstellt.

6. Verfahren gemäß irgendeinem vorstehenden Anspruch, worin G in der Formel (1) oder Formel (2) eine 6-gliedrige stickstoffhaltige heterocyclische Gruppe ist.

7. Verfahren gemäß irgendeinem vorstehenden Anspruch, worin in der Formel (1) oder Formel (2) G eine der folgenden Formeln (3-1), (3-2) und (3-3) darstellt:

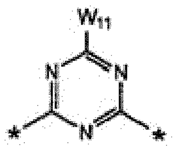
(3-1)

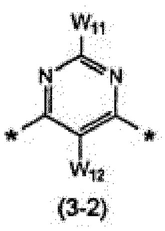
(3-2)

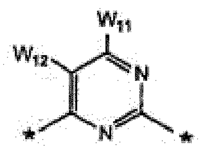
(3-3)

worin jedes von $W_{11}$ und $W_{12}$ unabhängig ein Wasserstoffatom oder einen Substituenten darstellt, der in der Lage ist, an den heterocyclischen Ring zu binden.

8. Verfahren gemäß irgendeinem vorstehenden Anspruch, worin X in der Formel (1) oder $X_1$ und $X_2$ in der Formel (2) eines ist/sind, ausgewählt aus einer Alkyloxycarbonylgruppe mit einer Kohlenstoffanzahl von 2 bis 12, einer Carbamoylgruppe mit einer Kohlenstoffanzahl von 1 bis 12 und einer Acylgruppe mit einer Kohlenstoffanzahl von 2 bis 12.

## Revendications

1. Procédé de production d'un pigment azoïque ou un sel, hydrate ou solvate de celui-ci, comprenant :

(a) une étape de réaction d'un agent de diazotation avec un composé aminé pour produire un composé diazonium,
(b) une étape de réalisation d'une réaction de couplage entre le composé diazonium obtenu dans l'étape (a) et un composant de couplage pour obtenir un mélange dans lequel au moins une partie d'un composé azoïque représenté par la formule (a) suivante produit par la réaction de couplage est dissous, et
(c) une étape de mélange du mélange obtenu dans l'étape (b) avec un mauvais solvant pour le composé azoïque afin de cristalliser un pigment azoïque de formule (1) :

Formule (1) :

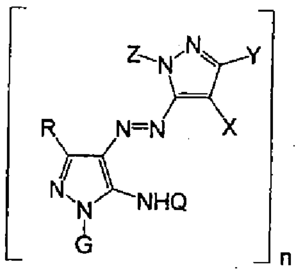

dans laquelle G représente un groupe hétérocyclique ; chaque R, X, Y, Z et Q représente indépendamment un atome d'hydrogène ou un substituent; n représente un entier de 1 à 4; et la formule représente un dimère par R, X, Y, Z, Q ou G lorsque n=2, représente un trimère par R, X, Y, Z, Q ou G lorsque n=3, et représente un tétramère par R, X, Y, Z, Q ou G lorsque n=4 ;
dans lequel, dans l'étape (b), le composé diazonium obtenu dans l'étape (a) est mélangé avec une solution acidique contenant le composant de couplage dissous dans un solvant acidique, le solvant acidique comprenant au moins l'un de l'acide acétique et l'acide sulfurique.

2. Procédé selon la revendication 1, dans lequel dans l'étape (b), une solution dans laquelle le composé azoïque représenté par la formule (1) est complètement dissous est obtenue.

3. Procédé selon la revendication 1 ou la revendication 2, dans lequel le composé azoïque obtenu dans l'étape (b) a une solubilité de 1 g/L ou moins dans ledit mauvais solvant.

4. Procédé selon l'une quelconque des revendications précédentes, dans lequel le mauvais solvant comprend l'un ou plusieurs de l'eau et d'un alcool ayant un nombre de carbone de 1 à 3.

5. Procédé selon l'une quelconque des revendications précédentes, dans lequel le pigment azoïque représenté par la formule (1) est un pigment azoïque représenté par la formule (2) suivante :

Formule (2) :

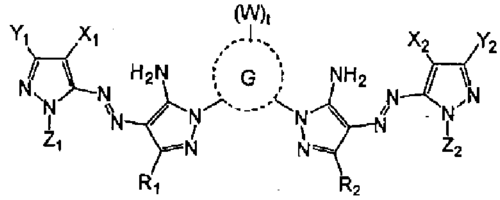

dans laquelle chaque $R_1$ et $R_2$ représente indépendamment un atome d'hydrogène ou un substituent; chaque $X_1$ et $X_2$ représente indépendamment un groupe électro-attractif ayant une valeur de Hammett $\sigma p$ de 0,2 ou plus; chaque $Y_1$ et $Y_2$ représente indépendamment un atome d'hydrogène ou un substituent monovalent; chaque $Z_1$ et $Z_2$ représente indépendamment un substituent monovalent; G représente un groupe hétérocyclique à 5 ou 6 chaînons; W représente un substituant capable de se lier à des groupes hétérocycliques constitués par G ; et t représente un entier de 0 à 3.

6. Procédé selon l'une quelconque des revendications précédentes, dans lequel, dans la formule (1) ou la formule (2),

G est un groupe hétérocyclique contenant de l'azote à 6 chaînons.

**7.** Procédé selon l'une quelconque des revendications précédentes, dans lequel, dans la formule (1) ou la formule (2), G représente l'une des formules (3-1), (3-2) et (3-3) suivantes :

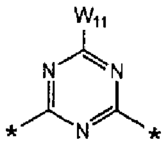
(3-1)

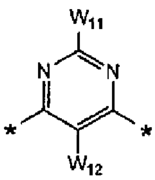
(3-2)

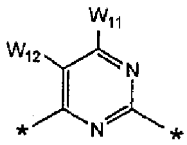
(3-3)

dans lesquelles chaque $W_{11}$ et $W_{12}$ représente indépendamment un atome d'hydrogène ou un substituent capable de se lier à un hétérocycle.

**8.** Procédé selon l'une quelconque des revendications précédentes, dans lequel X dans la formule (1) ou $X_1$ et $X_2$ dans la formule (2) est/sont l'un choisi parmi un groupe alkyloxycarbonyle ayant un nombre de carbone de 2 à 12, un groupe carbamoyle ayant un nombre de carbone de 1 à 12, et un groupe acyle un nombre de carbone de 2 à 12.

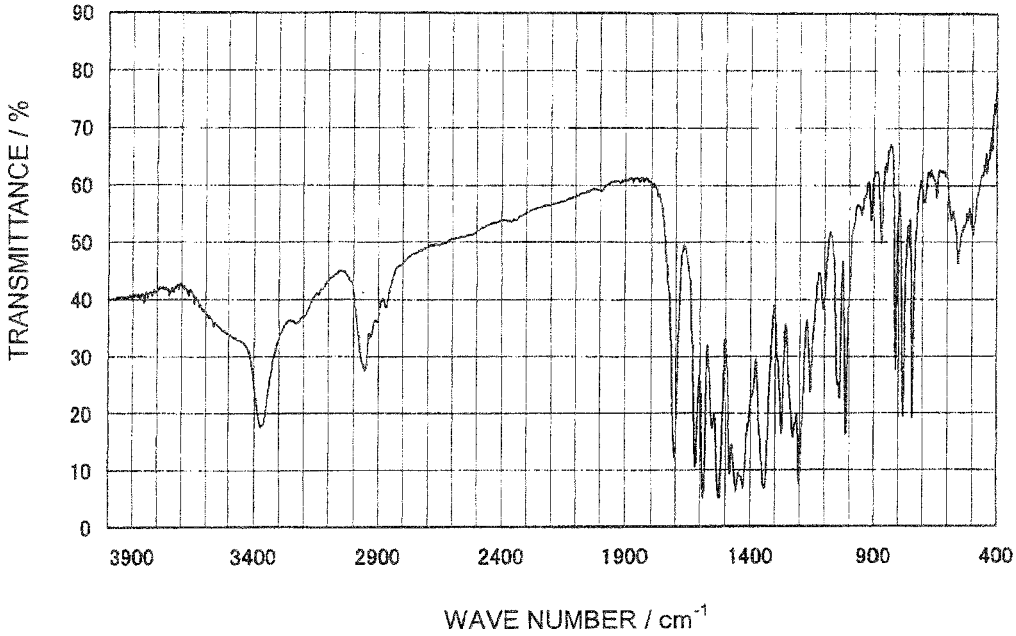

TRANSMITTANCE / %
90
80
70
60
50
40
30
20
10
0
3900
3400
2900
2400
1900
1400
900
400
WAVE NUMBER / cm-1


FIG. 1

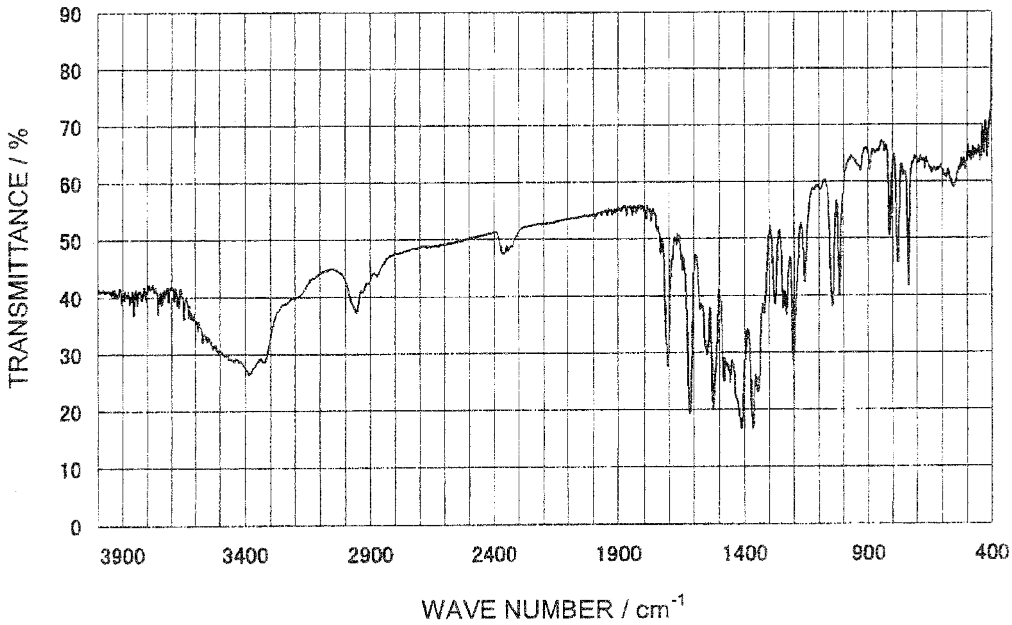

TRANSMITTANCE / %
90
80
70
60
50
40
30
20
10
0
3900
3400
2900
2400
1900
1400
900
400
WAVE NUMBER / cm-1


FIG. 2

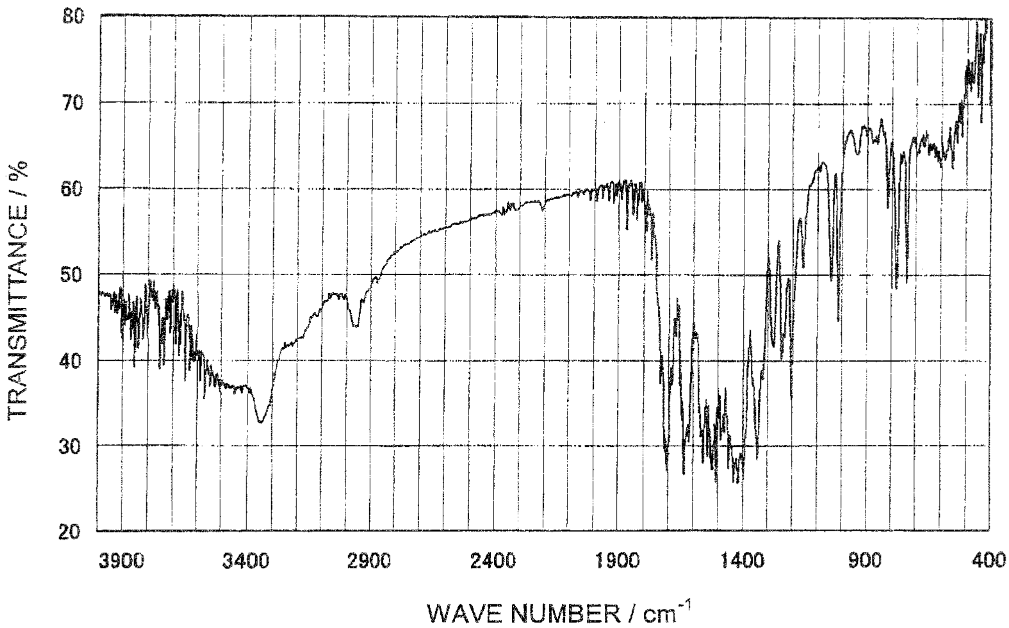
80
70
60
50
40
30
20
TRANSMITTANCE / %
3900
3400
2900
2400
1900
1400
900
400
WAVE NUMBER / cm-1

FIG. 3

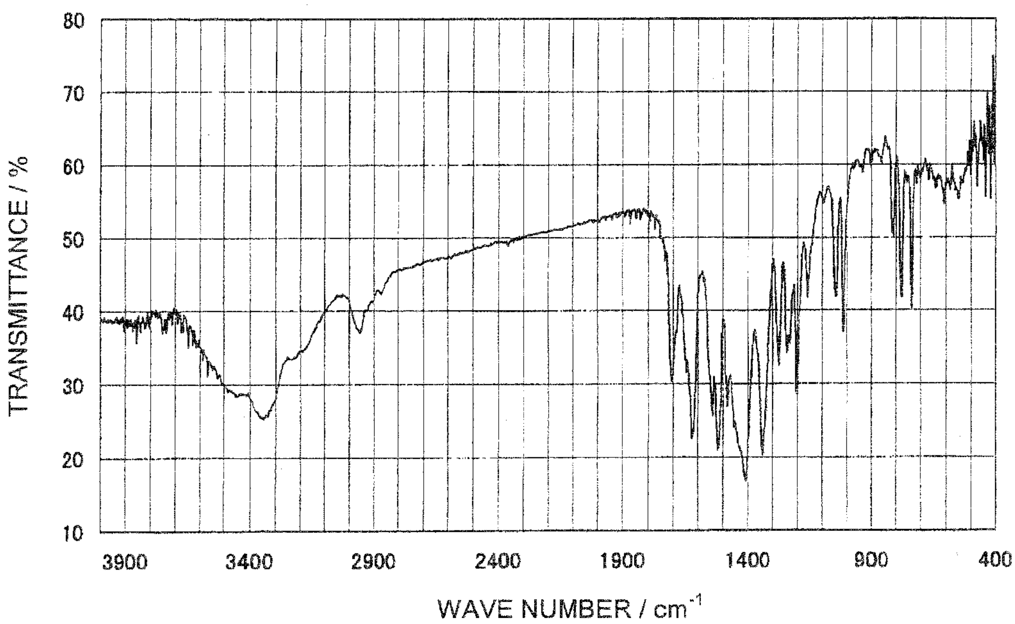
80
70
60
50
40
30
20
10
TRANSMITTANCE / %
3900
3400
2900
2400
1900
1400
900
400
WAVE NUMBER / cm-1

FIG. 4

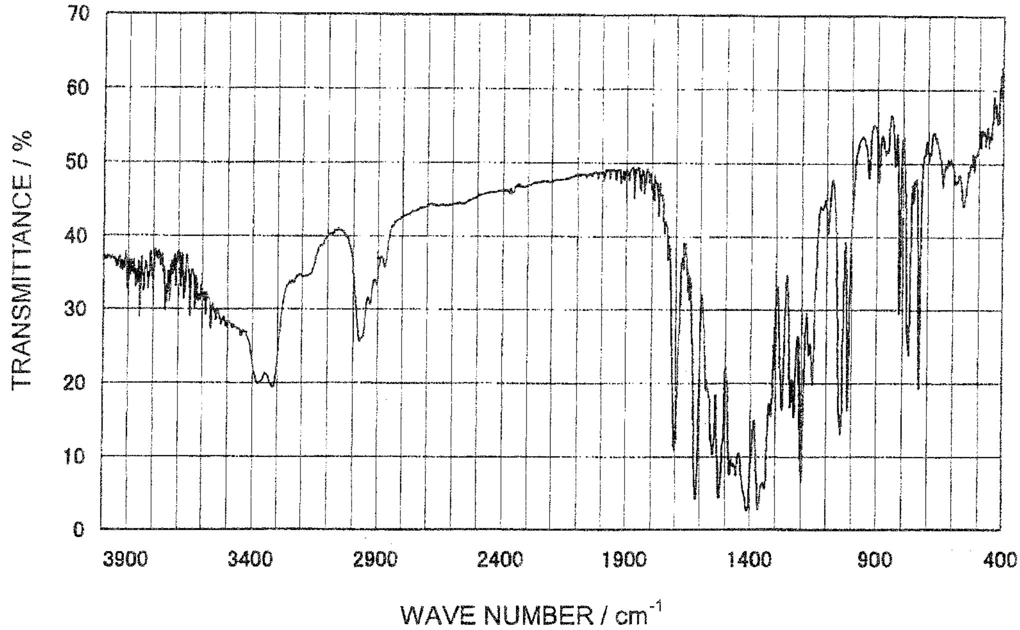
70
60
50
40
30
20
10
0
TRANSMITTANCE / %
3900
3400
2900
2400
1900
1400
900
400
WAVE NUMBER / cm-1

FIG. 5

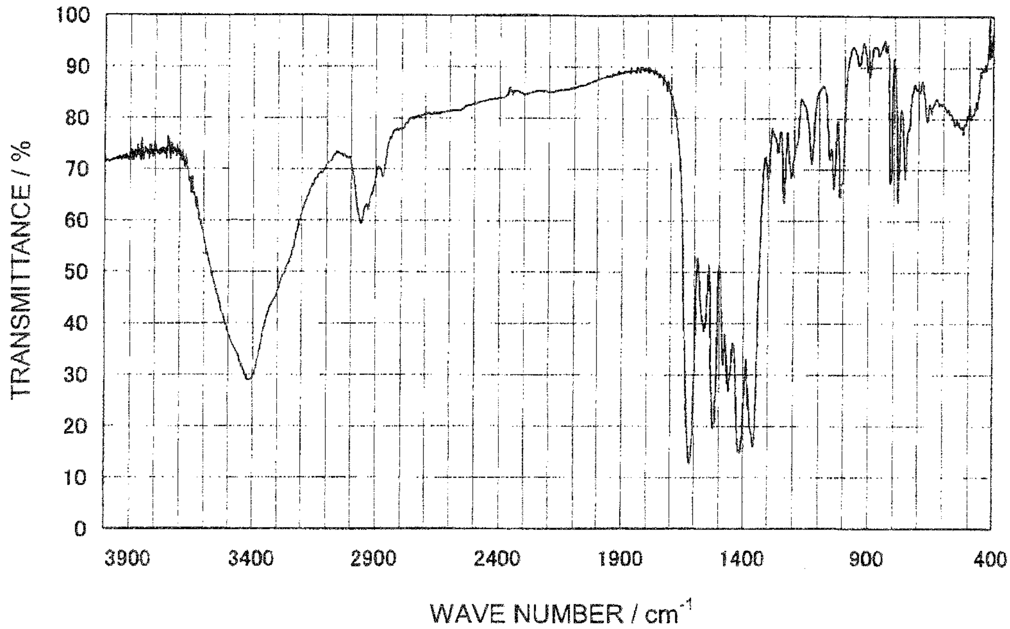
100
90
80
70
60
50
40
30
20
10
0
TRANSMITTANCE / %
3900
3400
2900
2400
1900
1400
900
400
WAVE NUMBER / cm-1

FIG. 6

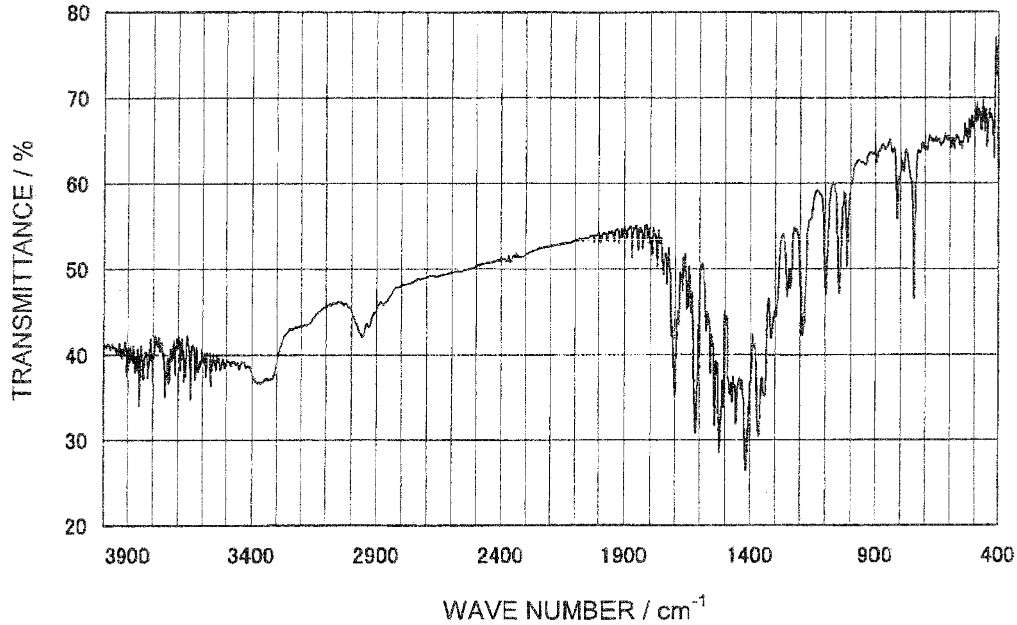
80
70
60
50
40
30
20
TRANSMITTANCE / %
3900
3400
2900
2400
1900
1400
900
400
WAVE NUMBER / cm-1

FIG. 7

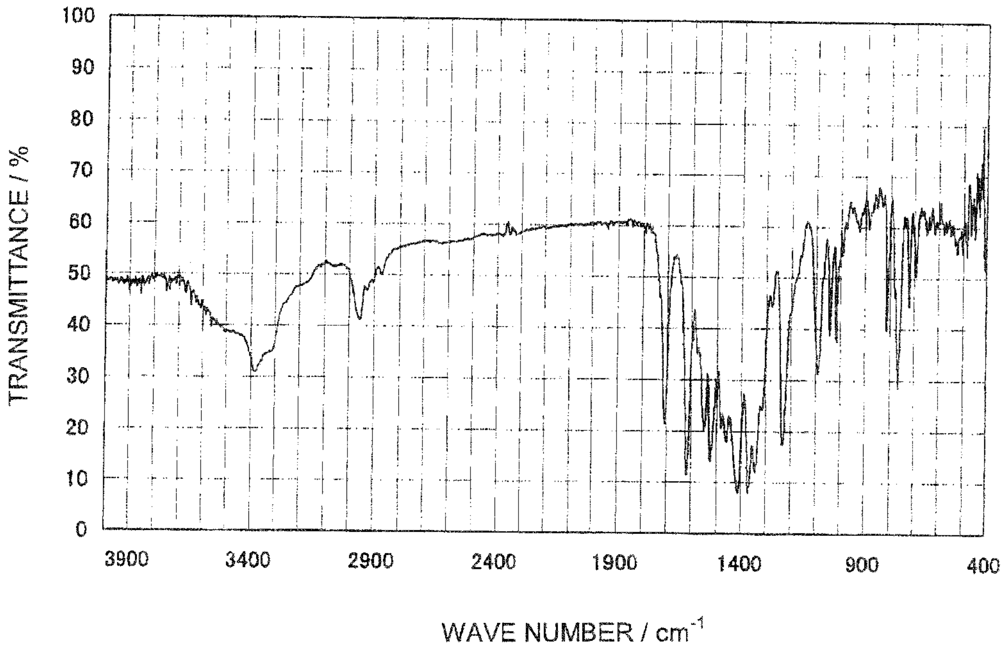
100
90
80
70
60
50
40
30
20
10
0
TRANSMITTANCE / %
3900
3400
2900
2400
1900
1400
900
400
WAVE NUMBER / cm-1

FIG. 8

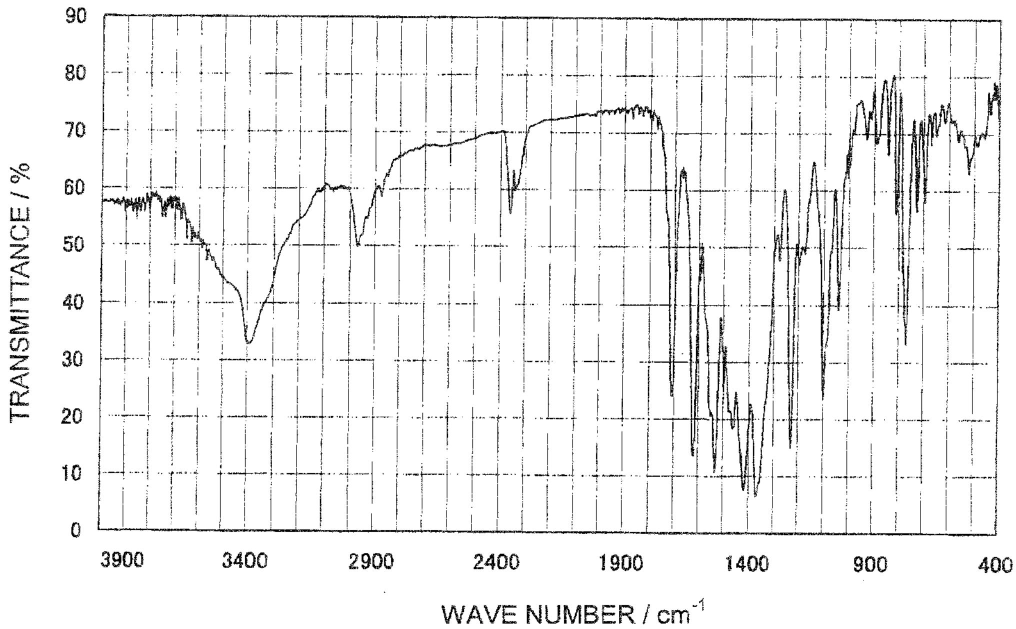
90
80
70
60
50
40
30
20
10
0
TRANSMITTANCE / %
3900
3400
2900
2400
1900
1400
900
400
WAVE NUMBER / cm-1

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004091560 A
- JP 2008063524 A
- JP 2007217681 A
- JP 2009073992 A
- WO 2009005137 A2
- JP 3273067 A
- JP 2003306623 A
- JP 2009205357 A
- JP 2010196934 A


### Non-patent literature cited in the description


- Shin Jikken Kagaku Koza (New Experimental Chemistry Course). Maruzen, vol. 14-III, 1516-1534
- **J.A. DEAN.** Lange's Handbook of Chemistry. McGraw-Hill, 1979
- Kagakuno Ryoiki (Chemistry Region). Nankodo, 1979, 96-103
- **GANRYO BUNSAN.** Anteika to Hyomen Shori Gijutsu•Hyoka (Dispersion Stabilization of Pigment and Surface Treatment Technique•Evaluation). Japan Association for International Chemical Information, December 2001, 29-46